# EUROPÄISCHE PATENTANMELDUNG

(11) **EP 3 883 124 A1**
(43) Veröffentlichungstag der Anmeldung: **22.09.2021**
(21) Anmeldenummer: 20164270.9
(22) Anmeldetag: 19.03.2020
(51) Int. Cl.: H02P 25/06, G05D 3/12, H02P 23/00, G01D 5/14, H02K 11/215, H02K 29/08, H02K 41/03, B65G 54/02

(54) **VERFAHREN ZUM STEUERN EINES PLANARANTRIEBSSYSTEMS UND PLANARANTRIEBSSYSTEM**

(71) Anmelder: Beckhoff Automation GmbH, 33415 Verl (DE)
(72) Erfinder: MAGUIRE, Keir, Vancouver, British Columbia V6K 4S7 (CA); SENSEN, Dominik, 33647 Bielefeld (DE); KAULMANN, Tim, 33104 Paderborn (DE); BENTFELD, Lukas, 33129 Delbrück (DE); NEUMANN, Klaus, 33330 Gütersloh (DE)
(74) Vertreter: Patentanwaltskanzlei WILHELM & BECK

(57) **Zusammenfassung**

Die Erfindung betrifft ein Verfahren (100) zum Steuern eines Planarantriebssystems (200), umfassend:
Bestimmen einer Mehrzahl von Werten von Statormagnetfeldern für eine Mehrzahl verschiedener Erregerströme und für eine Mehrzahl von Raumbereichen (502) in der zweidimensionalen Anordnung der Magnetfeldsensoren (501) in einem ersten Statormagnetfeldbestimmungsschritt (101);
Generieren wenigstens eines Statormagnetfeldes durch Anlegen entsprechender Erregerströme an entsprechende Statorleiter (309) zum elektrischen Steuern des Läufers (400) in einem Statormagnetfeldgenerierungsschritt (103);
Bestimmen einer Mehrzahl von Messwerten eines Gesamtmagnetfelds durch eine Mehrzahl von Magnetfeldsensoren (501) für eine Mehrzahl von Raumbereichen (502) des Sensormoduls (500) zum Ermitteln einer Position des Läufers (400) in einem Gesamtmagnetfeldbestimmungsschritt (105);
Kompensieren von Beiträgen der Statormagnetfelder zu den von den Magnetfeldsensoren (501) bestimmten Messwerten des Gesamtmagnetfelds und Generieren von durch die jeweiligen Magnetfeldsensoren (501) für den jeweiligen Raumbereich (502) bestimmten Messwerten des Läufermagnetfelds in einem Kompensationsschritt (107); und
Ermitteln einer Position des Läufers (400) auf Basis der generierten Messwerte des Läufermagnetfelds in einem Positionsbestimmungsschritt (109).

Die Erfindung betrifft ferner ein Planarantriebssystem (200).

## Beschreibung

Die Erfindung betrifft ein Verfahren zum Steuern eines Planarantriebssystems und ein Planarantriebssystem, das eingerichtet ist, das Verfahren zum Steuern eines Planarantriebssystems auszuführen.

Planarantriebssysteme können unter anderem in der Automatisierungstechnik, insbesondere der Fertigungstechnik, der Handhabungstechnik und der Verfahrenstechnik eingesetzt werden. Mittels Planarantriebssystemen kann ein bewegliches Element einer Anlage oder Maschine in mindestens zwei linear unabhängigen Richtungen bewegt oder positioniert werden. Planarantriebssysteme können einen permanenterregten elektromagnetischen Planarmotor mit einem planaren Stator und einem auf dem Stator in mindestens zwei Richtungen beweglichen Läufer umfassen.

Bei einem permanenterregten elektromagnetischen Planarmotor wird dadurch eine Antriebskraft auf den Läufer ausgeübt, dass stromdurchflossene Leiter mit Antriebsmagneten einer Magnetanordnung magnetisch wechselwirken. Die Erfindung betrifft insbesondere Ausgestaltungen von Planarantriebssystemen, bei denen die Antriebsmagneten eines elektrischen Planarmotors an dem Läufer und die stromdurchflossenen Leiter des Planarmotors in einem ortsfest angeordneten planaren Stator angeordnet sind.

Bei einem derartigen Antriebssystem umfasst der Läufer mindestens eine erste Magneteinheit für den Antrieb des Läufers in eine erste Richtung und eine zweite Magneteinheit für den Antrieb des Läufers in eine von der ersten Richtung linear unabhängige, beispielsweise in eine zu der ersten Richtung orthogonale, zweite Richtung. Der planare Stator umfasst mindestens eine Gruppe erster bestrombarer Leiter, welche mit den Magneten der ersten Magneteinheit magnetisch wechselwirken, um den Läufer in die erste Richtung anzutreiben, sowie eine Gruppe zweiter bestrombarer Leiter, welche mit den Magneten der zweiten Magneteinheit magnetisch wechselwirken, um den Läufer in die zweite Richtung anzutreiben. Die ersten und zweiten Gruppen von Leitern sind in der Regel unabhängig voneinander bestrombar, um voneinander unabhängige Bewegungen des Läufers in die erste und zweite Richtung zu ermöglichen. Sind die Leiter der ersten und zweiten Gruppe selbst zumindest in Teilen unabhängig voneinander bestrombar, können auf einem Stator zeitgleich mehrere Läufer unabhängig voneinander bewegt werden.

Die Druckschriften WO 2013/059934 A1, WO 2015/017933 A1, WO 2015/179962 A1, WO 2015/184553 A1, WO 2015/188281 A1, WO 2017/004716 A1 beschreiben jeweils Planarantriebssysteme (*displacement devices*), welche einen elektromagnetischen Planarmotor mit einem permanenterregten Läufer und einem mehrere bestrombare Leiter umfassenden Stator umfassen.

Zur Steuerung eines Läufers eines Planarantriebssystems ist es maßgeblich, eine Position des Läufers relativ zu dem Statormodul beziehungsweise zu den Statormodulen des Planarantriebssystems bestimmen zu können. Hierzu weist jedes Statormodul wenigstens ein Sensormodul mit einer Mehrzahl von Magnetfeldsensoren auf, die eingerichtet sind, das Magnetfeld des Läufers zu detektieren, wodurch eine Positionsbestimmung des Läufers relativ zu dem jeweiligen Sensormodul beziehungsweise relativ zu dem jeweiligen Statormodul ermöglicht. Je präziser eine solche Bestimmung einer Position des Läufers durchgeführt werden kann, desto präziser kann eine Steuerung des Planarantriebssystems erfolgen.

Es ist daher eine Aufgabe der Erfindung, ein Verfahren zum Steuern eines Planarantriebssystems bereitzustellen, dass aufgrund einer verbesserten Positionsbestimmung eines Läufers ein verbessertes und präziseres Steuern des Läufers ermöglicht. Eine weitere Aufgabe der Erfindung ist es, ein Planarantriebssystem bereitzustellen, das eingerichtet ist, das erfindungsgemäße Verfahren auszuführen.

Die Aufgaben werden durch ein Verfahren zum Steuern eines Planarantriebssystems und ein Planarantriebssystem gemäß den unabhängigen Ansprüchen gelöst. Bevorzugte Ausführungsformen sind in den abhängigen Ansprüchen angegeben.

Nach einem Aspekt der Erfindung wird ein Verfahren zum Steuern eines Planarantriebssystems bereitgestellt, wobei das Planarantriebssystem wenigstens eine Steuereinheit, ein Statormodul und einen Läufer umfasst, wobei das Statormodul eine Mehrzahl von elektrisch bestrombaren Statorleitern zum Erzeugen von Statormagnetfeldern zum elektrischen Steuern des Läufers umfasst, wobei der Läufer eine Magnetanordnung zum Generieren eines Läufermagnetfelds aufweist, wobei über das Statormagnetfeld und das Läufermagnetfeld eine magnetische Kopplung zwischen dem Läufer und dem Statormodul erzielbar ist, wobei das Statormodul zum Bestimmen einer Position des Läufers ein Sensormodul mit einer Mehrzahl von Magnetfeldsensoren umfasst, wobei die Magnetfeldsensoren in einer zweidimensionalen Anordnung am Statormodul angeordnet sind, und wobei jeder Magnetfeldsensor eingerichtet ist, für einen Raumbereich in der zweidimensionalen Anordnung das Läufermagnetfeld zu bestimmen, umfassend:
Bestimmen einer Mehrzahl von Werten von Statormagnetfeldern für eine Mehrzahl verschiedener Erregerströme und für eine Mehrzahl von Raumbereichen in der zweidimensionalen Anordnung der Magnetfeldsensoren in einem ersten Statormagnetfeldbestimmungsschritt;
Generieren wenigstens eines Statormagnetfeldes durch Anlegen entsprechender Erregerströme an entsprechende Statorleiter zum elektrischen Steuern des Läufers in einem Statormagnetfeldgenerierungsschritt;
Bestimmen einer Mehrzahl von Messwerten eines Gesamtmagnetfelds durch eine Mehrzahl von Magnetfeldsensoren für eine Mehrzahl von Raumbereichen des Sensormoduls zum Ermitteln einer Position des Läufers in einem Gesamtmagnetfeldbestimmungsschritt, wobei das Gesamtmagnetfeld eine Überlagerung der Mehrzahl von Statormagnetfeldern und dem Läufermagnetfeld umfasst;
Kompensieren von Beiträgen der Statormagnetfelder zu den von den Magnetfeldsensoren bestimmten Messwerten des Gesamtmagnetfelds und Generieren von durch die jeweiligen Magnetfeldsensoren für den jeweiligen Raumbereich bestimmten Messwerten des Läufermagnetfelds in einem Kompensationsschritt, wobei das Kompensieren eine Subtraktion der für die Erregerströme bestimmten Werte der Statormagnetfelder von den von den Magnetfeldsensoren bestimmten Messwerten des Gesamtmagnetfelds umfasst; und
Ermitteln einer Position des Läufers auf Basis der generierten Messwerte des Läufermagnetfelds in einem Positionsbestimmungsschritt.

Hierdurch wird der technische Vorteil erreicht, dass ein Verfahren zum Steuern eines Planarantriebssystems bereitgestellt werden kann, das aufgrund einer präzisen Positionsbestimmung eines Läufers des Planarantriebssystems eine verbesserte Steuerung des Läufers ermöglicht.

Eine Positionsbestimmung des Läufers relativ zum Statormodul wird über eine Mehrzahl von Messungen des Läufermagnetfelds durch die Mehrzahl von Magnetfeldsensoren des Sensormoduls des Statormoduls durchgeführt. Hierzu ist die Mehrzahl von Magnetfeldsensoren in einer zweidimensionalen Anordnung am Statormodul angeordnet. Auf Basis der Mehrzahl von Messwerten des Läufermagnetfelds kann eine relative Positionierung des Läufers in Bezug auf das Statormodul hergeleitet werden. Die Positionierung des Läufers durch das Statormodul wird über ein Erzeugen entsprechender Statormagnetfelder, sprich Magnetfelder der Statorleiter des Statormoduls, bewirkt. Dies hat zur Folge, dass die am Statormodul angeordneten Magnetfeldsensoren neben dem Läufermagnetfeld des Läufers eine Überlagerung der durch die Statorleiter generierten Statormagnetfelder des Statormoduls messen, da die Magnetfeldsensoren des Sensormoduls derart benachbart zu den Statorleitern am Statormodul angeordnet sind, dass die Magnetfeldsensoren neben dem Läufermagnetfeld auch substantielle Anteile des Statormagnetfelds messen. Dies führt zu einer Verfälschung der Messwerte des Läufermagnetfelds und somit zu einer Verringerung der Präzision der Positionsbestimmung des Läufers relativ zum Statormodul.

Durch die Kompensation der Beiträge der Statormagnetfelder zu den von den Magnetfeldsensoren aufgenommenen Messwerten eines Gesamtmagnetfelds, das Überlagerungen des Läufermagnetfelds und den Statormagnetfeldern umfasst, kann der Beitrag des Läufermagnetfelds zum gemessenen Gesamtmagnetfeld isoliert werden. Hierdurch ist eine akkurate Bestimmung des Läufermagnetfelds durch die Mehrzahl von Magnetfeldsensoren ermöglicht. Dies wiederum ermöglicht eine präzise Positionsbestimmung des Läufers relativ zum Statormodul. Hierüber ist wiederum eine verbesserte Steuerung des Läufers ermöglicht, indem dieser auf präzise Weise an den akkurat bestimmten Positionen auf dem Statormodul positioniert werden kann.

Durch die Bestimmung einer Mehrzahl von Werten von Statormagnetfeldern für eine Mehrzahl verschiedener Erregerströme und für eine Mehrzahl von Raumbereichen in der zweidimensionalen Anordnung der Magnetfeldsensoren kann eine Kompensation der Beiträge der Statormagnetfelder für beliebige Erregerströme und für beliebige Raumbereiche auf dem Statormodul erzielt werden. Hierdurch wird wiederum die Positionsbestimmung des Läufers und damit verbunden die Steuerung des Läufers präzisiert und somit verbessert.

Für ein Planarantriebssystem mit einer Mehrzahl von Statormodulen kann für jedes Statormodul gemäß dem Statormagnetfeldbestimmungsschritt individuell eine Mehrzahl von Werten von Statormagnetfeldern bestimmt werden, die gemäß dem erfindungsgemäßen Verfahren verwendet werden. Alternativ kann für ein Statormodul eine Mehrzahl von Werten von Statormagnetfeldern bestimmt werden, die als Referenzwerte für die Mehrzahl von Statormodulen gemäß dem erfindungsgemäßen Verfahren verwendet wird. Alternativ kann für die Mehrzahl von Statormodulen ein Satz von Werten des Statormagnetfelds erstellt werden, wobei jeder Wert des Satzes einem Mittelwert der individuell für die Mehrzahl von Statormodulen erstellten Werte der jeweiligen Statorfelder entspricht.

Ein Läufermagnetfeld ist im Sinne der Anmeldung ein vom Läufer des Planarantriebssystems generiertes Magnetfeld. Ein Statormagnetfeld ist im Sinne der Anmeldung ein von einem Statorleiter des Statormoduls des Planarantriebssystems generiertes Magnetfeld.

Ein Statorleiter ist im Sinne der Anmeldung ein bestrombares elektrisch leitfähiges Leiterelement, das eingerichtet ist, ein Magnetfeld zu generieren.

Ein Erregerstrom ist im Sinne der Anmeldung eine an einem Statorleiter angelegte Stromstärke zum Generieren eines Statormagnetfelds.

Ein Wert eines Statormagnetfelds, eines Läufermagnetfelds oder eines Gesamtmagnetfelds kann im Folgenden eine Feldstärke, eine Feldrichtung des jeweiligen Magnetfelds beziehungsweise eine Amplitude und/oder einen Winkel der jeweiligen magnetischen Flussdichte für einen beliebigen Raumpunkt umfassen. Ein Wert des Statormagnetfelds kann insbesondere durch drei orthogonale orientierte Vektorkomponenten ausgedrückt werden, wobei durch die drei Vektorkomponenten Komponenten des Statormagnetfelds parallel oder antiparallel zu drei vordefinierten Raumrichtungen bestimmt sind.

Ein Statormagnetfeld kann im Folgenden ein Magnetfeld eines einzelnen Statorleiters sein. Alternativ kann ein Statormagnetfeld eine Überlagerung einzelner Magnetfelder verschiedener Statorleiter sein.

Nach einer Ausführungsform wird das Bestimmen der Werte der Statormagnetfelder im ersten Statormagnetfeldbestimmungsschritt durch eine Mehrzahl von Messungen einer Mehrzahl von Magnetfeldsensoren des Sensormoduls durchgeführt.

Hierdurch wird der technische Vorteil erreicht, dass eine Bestimmung der Mehrzahl von Werten von Statormagnetfeldern für eine Mehrzahl verschiedener Erregerströme und für eine Mehrzahl von Raumbereichen am Statormodul durch das Statormodul durchgeführt werden kann. Hierdurch kann erreicht werden, dass eine Kompensation der Beiträge der Statormagnetfelder zu den Messwerten des Gesamtmagnetfelds während des Betriebs des Planarantriebssystems durchgeführt werden kann.

Hierzu können verschiedene Statormagnetfelder durch Anlegen verschiedener Erregerströme an verschiedenen Statorleitern des Statormoduls generiert werden und entsprechende Messwerte durch die Mehrzahl von Magnetfeldsensoren des Sensormoduls des Statormoduls ohne Anwesenheit eines Läufers bzw. ohne Einfluss eines Läufermagnetfeldes aufgenommen werden. Die aufgenommenen Werte der Statormagnetfelder zu den entsprechenden Erregerströmen können in entsprechenden Datensätzen gespeichert werden. Beim Betrieb des Planarantriebssystems beziehungsweise beim Ansteuern des Läufers durch Generieren entsprechender Statormagnetfelder können Beiträge dieser Statormagnetfelder zu den von den Magnetfeldsensoren aufgenommenen Messwerten des Gesamtmagnetfelds bestimmt und kompensiert werden.

Hierdurch wird eine hohe Flexibilität der Kompensation ermöglicht, indem das Bestimmen der Statormagnetfelder für verschiedene Erregerströme und verschiedene Raumbereiche des Statormoduls zu beliebigen Zeiten während des Betriebs des Planarantriebssystems durchgeführt werden kann. Somit können betriebsbedingte Veränderungen der Statormagnetfelder des Statormoduls in der Kompensation berücksichtigt werden. Hierdurch kann eine Positionsbestimmung des Läufers und damit verbunden eine Steuerung des Läufers weiter präzisiert und verbessert werden.

Nach einer Ausführungsform wird im Gesamtmagnetfeldbestimmungsschritt für jeden Magnetfeldsensor wenigstens ein Messwert des Gesamtmagnetfelds bestimmt; und
wobei im Kompensationsschritt Beiträge der Statormagnetfelder zu den Messwerten des Gesamtmagnetfelds für jeden Magnetfeldsensor kompensiert werden, und wobei für jeden Magnetfeldsensor wenigstens ein Messwert des Läufermagnetfelds für den Raumbereich des jeweiligen Magnetfeldsensors generiert wird.

Hierdurch wird der technische Vorteil erreicht, dass eine präzise Positionsbestimmung und damit verbunden eine präzise Steuerung des Läufers des Planarantriebssystems ermöglicht ist. Indem für jeden Magnetfeldsensor des Sensormoduls des Statormoduls die vom jeweiligen Magnetfeldsensor aufgenommenen Messwerte des Gesamtmagnetfelds in Bezug auf die Beiträge der Statormagnetfelder auf die von den Magnetfeldsensoren aufgenommenen Messwerte des Gesamtmagnetfelds korrigiert werden, kann für jeden Magnetfeldsensor eine präzise Bestimmung des Läufermagnetfelds für den jeweiligen Raumbereich des Magnetfeldsensors erreicht werden. Hierdurch wird eine Präzisierung der Positionsbestimmung des Läufermagnetfelds relativ zum Statormodul und damit verbunden eine Steuerung des Läufers verbessert.

Nach einer Ausführungsform umfasst der erste Statormagnetfeldbestimmungsschritt:
Bestimmen von Modelbeschreibungen von Abhängigkeiten zwischen Erregerströmen und Statormagnetfeldern der Statorleiter in einem Modellbestimmungsschritt;
wobei der Kompensationsschritt umfasst:
   Kompensieren der Beiträge der Statormagnetfelder zu den von den Magnetfeldsensoren bestimmten Messwerten des Gesamtmagnetfelds für beliebige Erregerströme auf Basis der bestimmten Modellbeschreibungen der Abhängigkeiten zwischen den Erregerströmen und den Statormagnetfeldern der Statorleiter.

Hierdurch wird der technische Vorteil erreicht, dass eine präzise Positionsbestimmung und eine akkurate Steuerung des Läufers des Planarantriebssystems erreicht wird. Durch eine Modellbeschreibung von Abhängigkeiten zwischen Erregerströmen und Statormagnetfeldern für eine Mehrzahl von Statorleitern des Statormoduls basierend auf den im Statormagnetfeldbestimmungsschritt bestimmten Werten von Statormagnetfeldern für eine Mehrzahl verschiedener Erregerströme können basierend auf der jeweiligen Modellbeschreibung für beliebige Erregerströme Werte der dazu gehörenden Statormagnetfelder bestimmt werden.

Hierdurch können Statormagnetfelder für Erregerströme bestimmt werden, für die im Statormagnetfeldbestimmungsschritt keine Werte des jeweiligen Statormagnetfelds bestimmt beziehungsweise gemessen wurden. Auf Basis der Modellbeschreibungen können entsprechende Kompensationen der Beiträge der entsprechenden Statormagnetfelder beliebiger Erregerströme zu den von den Magnetfeldsensoren bestimmten Messwerten des Gesamtmagnetfelds kompensiert werden. Hierdurch wird eine verbesserte Kompensation und Korrektur der durch die Magnetfeldsensoren bestimmten Messwerte des Gesamtmagnetfelds und damit verbunden eine verbesserte Bestimmung des Läufermagnetfelds erreicht, indem Beiträge von Statormagnetfeldern beliebiger Erregerströme kompensiert und entsprechende Messwerte der Magnetfeldsensoren korrigiert werden können.

Nach einer Ausführungsform wird im Modellbestimmungsschritt für jeden Statorleiter eine individuelle Modellbeschreibung der Abhängigkeit zwischen den an dem jeweiligen Statorleiter angelegten Erregerströmen und den vom jeweiligen Statorleiter erzeugten Statormagnetfeldern bestimmt, und wobei im Kompensationsschritt für jeden Magnetfeldsensor auf Basis der erstellten Modelle die Beiträge der Statormagnetfelder zu den von dem jeweiligen Magnetfeldsensor bestimmten Messwerten des Gesamtmagnetfelds kompensiert werden und Messwerte des Läufermagnetfelds bestimmt werden.

Hierdurch wird der technische Vorteil erreicht, dass eine präzise Positionsbestimmung und damit verbunden eine präzise und akkurate Steuerung des Läufers des Planarantriebssystems ermöglicht ist. Indem für jeden Statorleiter des Statormoduls eine individuelle Modellbeschreibung der Abhängigkeit zwischen Erregerströmen und vom jeweiligen Statorleiter generierten Statormagnetfeldern berücksichtigt wird, kann eine weitere Präzisierung der Bestimmung der jeweiligen Statormagnetfelder erreicht werden.

Hierdurch kann wiederum eine Kompensation der Beiträge der jeweiligen Statormagnetfelder zu den von den Magnetfeldsensoren gemessenen Werten des Gesamtmagnetfelds verbessert werden. Dies trägt wiederum zu einer verbesserten Bestimmung des Läufermagnetfelds auf Basis der Messwerte der einzelnen Magnetfeldsensoren bei. Dies führt wiederum zu einer verbesserten Positionsbestimmung und damit verbunden zu einer verbesserten Steuerung des Läufers des Planarantriebssystems.

Nach einer Ausführungsform umfasst die Modellbeschreibung der Abhängigkeit zwischen den an dem jeweiligen Statorleiter angelegten Erregerströmen und den vom jeweiligen Statorleiter erzeugten Statormagnetfeldern im Modellbestimmungsschritt ein entsprechend trainiertes Neuronales Netz, wobei das entsprechend trainierte Neuronale Netz eingerichtet ist, für einen beliebigen Statorleiter und beliebige Erregerströme für beliebige Raumbereiche beliebiger Magnetfeldsensoren Werte des entsprechenden Statormagnetfelds zu bestimmen.

Hierdurch wird der technische Vorteil erreicht, dass für jeden Statorleiter und eine Vielzahl verschiedener Erregerströme für die Raumbereiche der Magnetfeldsensoren des Sensormoduls präzise Bestimmungen der zu erwartenden Statormagnetfelder bestimmt werden kann.

Nach einer Ausführungsform wird die Kompensation im Kompensationsschritt durch ein entsprechend trainiertes Neuronales Netz durchgeführt, wobei das entsprechend trainierte Neuronale Netz eingerichtet ist, für jeden Magnetfeldsensor die Beiträge der Statormagnetfelder zu den von dem jeweiligen Magnetfeldsensor bestimmten Messwerten des Gesamtmagnetfelds zu kompensiert und Messwerte des Läufermagnetfelds zu bestimmen.

Hierdurch wird der technische Vorteil erreicht, dass für jeden Magnetfeldsensor eine präzise Kompensation der Einflüsse der Statormagnetfelder der Statorleiter erreicht werden kann.

Alternativ kann eine Mehrzahl verschiedener trainierter Neuronaler Netze verwendet werden. Insbesondere kann für jedes Statormodul ein individuell trainiertes Neuronales Netz verwendet werden.

Nach einer Ausführungsform umfasst das erfindungsgemäße Verfahren ferner:
Kalibrieren der Statorleiter in einem Kalibierschritt.

Hierdurch wird der technische Vorteil erreicht, dass eine verbesserte Bestimmung der Statormagnetfelder des Statormoduls und eine verbesserte Steuerung des Läufers des Planarantriebssystems erreicht werden. Durch Kalibrieren der einzelnen Statorleiter kann für jeden Statorleiter präzise ein Zusammenhang zwischen angelegtem Erregerstrom und vom jeweiligen Statorleiter erzeugtem Statormagnetfeld bestimmt werden. Hierdurch kann für jeden Statorleiter präzise ein gewünschtes Statormagnetfeld durch Anlegen des jeweiligen Erregerstroms generiert werden. Dies ermöglicht eine möglichst präzise Ansteuerung des Läufers, indem das exakt gewünschte Statormagnetfeld generiert werden kann, das zum Positionieren des Läufers in einer bestimmten Position auf dem Statormodul benötigt wird. Darüber hinaus ermöglicht die präzise Generierung der Statormagnetfelder eine präzisere Bestimmung der Statormagnetfelder des Statormoduls im Statormagnetfeldbestimmungsschritt und damit verbunden eine präzisere Kompensation der Beiträge der jeweiligen Statormagnetfelder zu den von den Magnetfeldsensoren gemessenen Messwerten des Gesamtmagnetfelds. Durch die Kalibrierung der Statorleiter kann somit wiederum eine präzisere Positionsbestimmung des Läufers durch die Messwerte der Magnetfeldsensoren des Sensormoduls des Statormoduls erreicht werden.

Nach einer Ausführungsform umfasst der Kalibrierschritt:
Bestimmen einer Mehrzahl von Sollstatormagnetfeldern für eine Mehrzahl von Sollerregerströmen für eine Mehrzahl von Statorleitern in einem Sollstatormagnetfeldbestimmungsschritt, wobei ein Sollstatormagnetfeld eines Statorleiters einem Magnetfeld eines idealen Referenzleiters mit gleichen Parametern wie der jeweilige Statorleiter für einen jeweiligen Sollerregerstrom entspricht;
Generieren auf Basis der Sollerregerströme von realen Statormagnetfeldern der Statorleiter in einem Generierungsschritt, wobei ein reales Statormagnetfeld eines Statorleiters ein durch den jeweiligen Statorleiter für den jeweiligen Sollerregerstrom generiertes Magnetfeld ist;
Bestimmen von Werten der realen Statormagnetfelder für die Sollerregerströme der Mehrzahl von Statorleitern in einem zweiten Statormagnetfeldbestimmungsschritt;
Definieren von Zuordnungen zwischen den Sollerregerströmen und den entsprechenden realen Statormagnetfeldern für eine Mehrzahl von Statorleitern in einem Zuordnungsschritt; und Bestimmen auf Basis der Zuordnungen von realen Erregerströmen für die Mehrzahl von Statorleitern in einem Erregerstrombestimmungsschritt, wobei ein realer Erregerstrom eines Statorleiters einem Sollerregerstrom entspricht, für den der jeweilige Statorleiter ein entsprechendes reales Statormagnetfeld erzeugt.

Hierdurch wird der technische Vorteil erreicht, dass eine präzise Kalibrierung der Statorleiter ermöglicht ist. Hierdurch wird wiederum eine verbesserte Positionsbestimmung und eine verbesserte Steuerung des Läufers des Planarantriebssystems erreicht. Durch die Kalibrierung einzelner Statorleiter können produktionsbedingte Unregelmäßigkeiten in der Beschaffenheit der einzelnen Statorleiter beziehungsweise in der Positionierung der Statorleiter auf dem Statormodul berücksichtigt und korrigiert werden. Indem für jeden Statorleiter eine individuelle Beziehung zwischen angelegtem Erregerstrom und generiertem Statormagnetfeld bestimmt wird, kann für jeden Statorleiter unabhängig von den produktionsbedingten Unregelmäßigkeiten in der Ausgestaltung der einzelnen Statorleiter beziehungsweise in der Positionierung der einzelnen Statorleiter im Statormodul eine exakte Bestimmung des vom jeweiligen Statorleiter generierten Statormagnetfelds vorgenommen werden. Für jedes Statormodul kann somit exakt das gewünschte Statormagnetfeld generiert werden, das zur Steuerung des Läufers und zur Positionierung des Läufers in einer gewünschten Position relativ zum Statormodul benötigt wird. Hierdurch kann eine verbesserte Steuerung des Planarantriebssystems erreicht werden.

Nach einer Ausführungsform wird das Bestimmen der Werte der realen Statormagnetfelder im zweiten Statormagnetfeldbestimmungsschritt durch eine Mehrzahl von Messungen einer Mehrzahl von Magnetfeldsensoren des Sensormoduls durchgeführt.

Hierdurch wird der technische Vorteil erreicht, dass eine erhöhte Flexibilität und Anwendbarkeit des erfindungsgemäßen Verfahrens ermöglicht ist. Indem das Bestimmen der realen Statormagnetfelder im zweiten Statormagnetfeldbestimmungsschritt durch die Magnetfeldsensoren des Sensormoduls des Statormoduls durchgeführt wird, kann die Kalibrierung der Statorleiter durch das Statormodul durchgeführt werden. Somit kann für ein bereits verbautes Statormodul des Planarantriebssystems eine Kalibrierung der jeweiligen Statorleiter des Statormoduls in bereits verbautem Zustand durchgeführt werden. Eine Kalibrierung der Statorleiter des Statormoduls kann somit ebenfalls während des Betriebs des Planarantriebssystems durchgeführt werden.

Nach einer Ausführungsform umfasst das erfindungsgemäße Verfahren ferner:
Kalibrieren der Magnetfeldsensoren in einem Sensorkalibrierschritt.

Hierdurch wird der technische Vorteil erreicht, dass eine präzise Positionsbestimmung und damit verbunden eine präzise Steuerung des Läufers des Planarantriebssystems erreicht werden kann. Durch Kalibrieren der Magnetfeldsensoren kann die Genauigkeit der Messwerte des Gesamtmagnetfelds der Magnetfeldsensoren verbessert werden. Mit einer höheren Genauigkeit der Messwerte der Magnetfeldsensoren kann eine Bestimmung des Läufermagnetfelds durch die Magnetfeldsensoren des Sensormoduls verbessert werden. Hierdurch kann eine Positionsbestimmung des Läufers über die Messungen der Magnetfeldsensoren und damit verbunden eine Steuerung des Läufers des Planarantriebssystems verbessert werden.

Nach einer Ausführungsform umfasst der Kalibrierschritt: Generieren eines ersten Referenzmagnetfelds in einem ersten Referenzmagnetfeldgenerierungsschritt, wobei Werte des ersten Referenzmagnetfelds für eine Mehrzahl von Raumbereichen des Statormoduls bekannt sind;
Ermitteln von Messwerten des Referenzmagnetfelds für eine Mehrzahl von Raumbereichen des Statormoduls durch eine Mehrzahl von Magnetfeldsensoren in einem ersten Referenzmagnetfeldbestimmungsschritt;
Ermitteln für eine Mehrzahl von Magnetfeldsensoren von Abweichungen der durch die Magnetfeldsensoren ermittelten Messwerte des Referenzmagnetfelds von den bekannten Werten des Referenzmagnetfelds in den jeweiligen Raumbereichen in einem Abweichungsbestimmungsschritt;
Korrigieren auf Basis der ermittelten Abweichungen der durch die Magnetfeldsensoren ermittelten Messwerte des Gesamtmagnetfelds und/oder des Läufermagnetfelds und/oder der Statormagnetfelder in einem Korrekturschritt.

Hierdurch wird der technische Vorteil erreicht, dass eine präzisere Kalibrierung der Magnetfeldsensoren und damit verbunden eine Verbesserung der Präzision der Messwerte der Magnetfeldsensoren erreicht werden kann. Indem für jeden Magnetfeldsensor des Sensormoduls eine Relation zwischen tatsächlich angelegtem Magnetfeld und real durch den Magnetfeldsensor gemessenem Magnetfeld bestimmt wird, kann eine präzise Kalibrierung jedes einzelnen Magnetfeldsensors des Sensormoduls durchgeführt werden. Eine Kalibrierung der einzelnen Magnetfeldsensoren ermöglicht dabei eine genaue Bestimmung des durch den jeweiligen Magnetfeldsensor gemessenen Magnetfelds. Hierdurch kann eine exakte Bestimmung des Läufermagnetfelds durch die einzelnen Magnetfeldsensoren des Sensormoduls erreicht werden. Hierüber kann wiederum eine präzise Positionsbestimmung und damit verbunden eine präzise Steuerung des Läufers erreicht werden.

Nach einer Ausführungsform umfasst der Sensorkalibrierschritt ferner:
Ermitteln einer Mehrzahl verschiedener Temperaturen des Statormoduls in einem Temperaturbestimmungsschritt;
Generieren eines zweiten Referenzmagnetfelds in einem zweiten Referenzmagnetfeldgenerierungsschritt, wobei Werte des zweiten Referenzmagnetfelds für eine Mehrzahl von Raumbereichen bekannt sind;
Ermitteln durch eine Mehrzahl von Magnetfeldsensoren einer Mehrzahl von Messwerten des zweiten Referenzmagnetfelds für die Mehrzahl von Temperaturen und eine Mehrzahl von Raumbereichen in einem zweiten Referenzmagnetfeldbestimmungsschritt;
Ermitteln von Temperaturabhängigkeiten der durch die Magnetfeldsensoren bestimmten Messwerte des zweiten Referenzmagnetfelds auf Basis der Werte des zweiten Referenzmagnetfelds in einem Abhängigkeitsbestimmungsschritt; und
Korrigieren der durch die Magnetfeldsensoren ermittelten Messwerte des Gesamtmagnetfelds und/oder des Läufermagnetfelds und/oder der Statormagnetfelder auf Basis der ermittelten Temperaturabhängigkeiten in einem Korrekturschritt.

Hierdurch wird der technische Vorteil erreicht, dass eine präzise Positionsbestimmung des Läufers und damit verbunden eine präzise Steuerung des Läufers bereitgestellt werden kann. Durch die Berücksichtigung der Temperatur des Statormoduls und damit verbunden der Temperatur der einzelnen Magnetfeldsensoren des Sensormoduls können Temperatureinflüsse auf die einzelnen Sensoren und damit verbundene Verfälschungen der Messwerte der einzelnen Magnetfeldsensoren berücksichtigt werden.

Hierdurch kann die Präzision der einzelnen Magnetfeldsensoren erhöht werden. Indem für jeden Magnetfeldsensor ein Zusammenhang zwischen Temperatur des Sensormoduls beziehungsweise Temperatur des Magnetfeldsensors und Abweichung zwischen einem angelegten Magnetfeld und dem von dem jeweiligen Magnetfeldsensor gemessenen Messwert bestimmt wird, können im Betrieb des Planarantriebssystems für jeden Magnetfeldsensor entsprechende Temperatureinflüsse auf die vom Magnetfeldsensor gemessenen Messwerte des Gesamtmagnetfelds berücksichtigt und die jeweiligen Messwerte korrigiert werden. Temperaturbedingte Verfälschungen der Messwerte der einzelnen Magnetfeldsensoren des Sensormoduls können somit unterbunden werden.

Hierdurch kann die Genauigkeit der Messungen der einzeln Magnetfeldsensoren des Sensormoduls erhöht werden. Damit verbunden kann eine Präzision der Bestimmung des Läufermagnetfelds durch die Messungen der einzelnen Magnetfeldsensoren des Sensormoduls erhöht werden. Hierdurch kann wiederum eine Positionsbestimmung und damit verbunden eine Steuerung des Läufers präzisiert und verbessert werden.

Nach einer Ausführungsform ist das erste Referenzmagnetfeld und/oder das zweite Referenzmagnetfeld das Läufermagnetfeld des Läufers oder das Statormagnetfeld des Statormoduls.

Hierdurch wird der technische Vorteil erreicht, dass eine erhöhte Präzisierung der Positionsbestimmung beziehungsweise Steuerung des Läufers dadurch erreicht werden kann, dass eine Kalibrierung der Magnetfeldsensoren des Sensormoduls im Betrieb des Planarantriebssystems durchführbar ist. Indem die zur Kalibrierung der einzelnen Magnetfeldsensoren des Sensormoduls benötigten ersten und zweiten Referenzmagnetfelder durch das Läufermagnetfeld des Läufers oder die Statormagnetfelder der einzelnen Statorleiter beziehungsweise des Statormoduls generiert werden, kann eine Kalibrierung der Magnetfeldsensoren und eine Berücksichtigung der Temperatureinflüsse der Magnetfeldsensoren durch ein bereits verbautes und im Betrieb befindliches Statormodul beziehungsweise durch einen dazu gehörenden Läufer des Planarantriebssystems durchgeführt werden. Indem das erste und zweite Referenzmagnetfeld durch das Läufermagnetfeld des Läufers beziehungsweise die Statormagnetfelder des Statormoduls bereitgestellt werden, kann auf eine externe Magnetfeldquelle beziehungsweise eine externe Kalibrieranordnung, mittels welcher das erste und zweite Referenzmagnetfeld erzeugt wird, verzichtet werden. Hierdurch wird die Flexibilität der Sensorkalibrierung erhöht.

Durch die Kalibrierung der Magnetfeldsensoren des Sensormoduls inklusive der Bestimmung von Temperaturverhalten der Sensoren können sensorinterne Fehler, die bei der Herstellung des Magnetfeldsensors auftreten, beziehungsweise Fehlpositionierungen des jeweiligen Magnetfeldsensors in dem Sensormodul des Statormoduls berücksichtigt und korrigiert werden.

Nach einer Ausführungsform umfasst das Verfahren ferner: Variieren des ersten Referenzmagnetfelds und/oder des zweiten Referenzmagnetfelds für eine Mehrzahl von Raumbereichen in einem Variierungssschritt.

Hierdurch wird der technische Vorteil erreicht, dass eine Kalibrierung der Magnetfeldsensoren des Sensormoduls verbessert werden kann. Durch Variieren der ersten und/oder zweiten Referenzmagnetfelder für die Raumbereiche der Magnetfeldsensoren kann ein detaillierter Datensatz zur Kalibrierung der Magnetfeldsensoren für eine Mehrzahl verschiedener Referenzmagnetfelder erzeugt werden. Hierdurch kann die Kalibrierung der Magnetfeldsensoren präzisiert werden. Eine Variation der ersten und zweiten Referenzmagnetfelder kann hierbei eine Variation der Magnetfeldstärke wie auch der Magnetfeldrichtung beziehungsweise der Amplitude und des Winkels der Magnetflussdichte für einen beliebigen Raumpunkt umfassen.

Nach einer Ausführungsform umfasst das erfindungsgemäße Verfahren ferner:
Erstellen einer Kalibrationsdatei in einem Kalibrationsdateierstellungsschritt, wobei die Kalibrationsdatei die im Statormagnetfeldbestimmungsschritt bestimmten Werte und ermittelte Information und/oder die im Kalibrierschritt bestimmten Werte und ermittelte Information und/oder die im Sensorkalibirierschritt bestimmten Werte und ermittelte Information umfasst.

Hierdurch wird der technische Vorteil erreicht, das bestimmte Werte und ermittelte Information der einzelnen Verfahrensschritte gespeichert und für eine erneute Kalibration der einzelnen Komponenten wiederverwendet werden können. Damit kann das Verfahren bei erneuter Durchführung vereinfacht und beschleunigt werden. Die Werte und Information der Kalibrationsdatei könne bei erneuter Durchführung des Verfahrens in dem Statormagnetfeldbestimmungsschritt, dem Kalibrierschritt und dem Sensorkalibrierschritt als entsprechende Werte und Informationen verwendet werden. Insbesondere kann die Kalibrationsdatei Modellbeschreibungen, insbesondere mathematische Funktion oder entsprechend trainierte Neuronale Netze, umfassen, die eingerichtet sind, für einen beliebigen Statorleiter und beliebige Erregerströme für beliebige Raumbereiche beliebiger Magnetfeldsensoren Werte des entsprechenden Statormagnetfelds bestimmen können.

Alternativ können der Statormagnetfeldbestimmungsschritt, der Kalibrierschritt und der Sensorkalibrierschritt werkseitig durchgeführt werden, sodass ein Nutzer des Planarantriebssystems auf Basis der erstellten Kalibrationsdatei, die der Nutzer beispielsweise von einem Server herunterladen kann, das erfindungsgemäße Verfahren und insbesondere den Statormagnetfeldbestimmungsschritt, den Kalibrierschritt und den Sensorkalibrierschritt mit den entsprechenden Werten und Informationen der Kalibrationsdatei durchführen kann. Die Verbindung zwischen einer speziellen Kalibrationsdatei und einem Statormodul kann hierbei über eine eineindeutige Identifikationnummer hergestellt werden, die jeweils auf dem Statormodul und in der Kalibrationsdatei gespeichert ist. Alternativ kann die Kalibrationsdatei in dem jeweiligen Statormodul selbst gespeichert werden. Die Kalibrationsdatei kann auch zwischen einem Server und/oder einer Steuereinheit und/oder dem Statormodul ausgetauscht werden.

Nach einem zweiten Aspekt der Erfindung wird ein Planarantriebssystem bereitgestellt, wobei das Planarantriebssystem wenigstens eine Steuereinheit, ein Statormodul und einen Läufer umfasst, wobei die Steuereinheit über wenigstens eine Datenverbindung mit dem Statormodul verbunden ist, wobei das Statormodul eine Mehrzahl von elektrisch bestrombaren Statorleitern zum Erzeugen von Statormagnetfeldern zum elektrischen Steuern des Läufers umfasst, wobei der Läufer eine Magnetanordnung zum Generieren eines Läufermagnetfelds aufweist, wobei über das Statormagnetfeld und das Läufermagnetfeld eine magnetische Kopplung zwischen dem Läufer und dem Statormodul erzielbar ist, wobei das Statormodul zum Bestimmen einer Position des Läufers ein Sensormodul mit einer Mehrzahl von Magnetfeldsensoren umfasst, wobei die Magnetfeldsensoren in einer zweidimensionalen Anordnung am oder im Statormodul angeordnet sind, wobei jeder Magnetfeldsensor eingerichtet ist, für einen Raumbereich in der zweidimensionalen Anordnung das Läufermagnetfeld zu bestimmen, und wobei die Steuereinheit eingerichtet ist, ein erfindungsgemäßes Verfahren zum Steuern eines Planarantriebssystems auszuführen.

Hierdurch kann ein Planarantriebssystem bereitgestellt werden, dass über eine präzise und verbesserte Steuerung verfügt und eingerichtet ist, das erfindungsgemäße Verfahren mit den genannten Vorteilen auszuführen.

Die Erfindung wird anhand der beigefügten Figuren näher erläutert. Hierbei zeigen:
- Fig. 1: eine schematische Darstellung eines Planarantriebssystems mit einem Statormodul und einem Läufer gemäß einer Ausführungsform;
- Fig. 2: eine schematische und perspektivische Ansicht eines Sensormoduls des Statormoduls gemäß einer Ausführungsform; und
- Fig. 3: eine schematische Darstellung einer Unterseite eines Läufers gemäß einer weiteren Ausführungsform;
- Fig. 4: ein Flussdiagramm eines Verfahrens zum Steuern eines Planarantriebssystems gemäß einer Ausführungsform;
- Fig. 5: ein weiteres Flussdiagramm eines Verfahrens zum Steuern eines Planarantriebssystems gemäß einer Ausführungsform;
- Fig. 6: ein weiteres Flussdiagramm eines Verfahrens zum Steuern eines Planarantriebssystems gemäß einer Ausführungsform; und
- Fig. 7: ein weiteres Flussdiagramm eines Verfahrens zum Steuern eines Planarantriebssystems gemäß einer Ausführungsform.

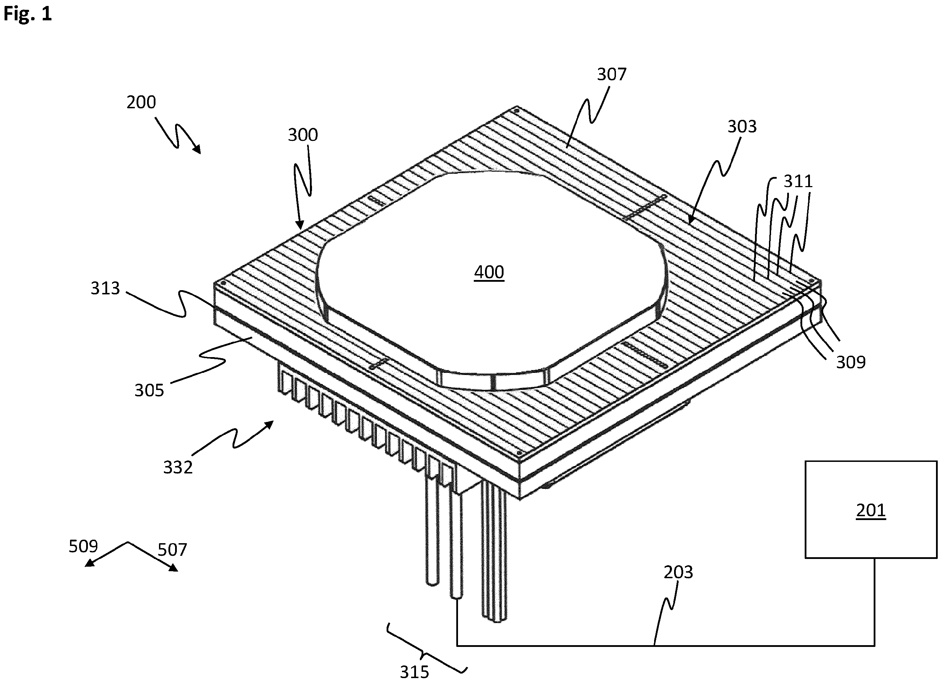

Fig. 1 zeigt eine schematische Ansicht eines Planarantriebssystems 200 mit einem Statormodul 300 und einem Läufer 400.

Gemäß der Ausführungsform in Fig.1 umfasst das Planarantriebssystem eine Steuereinheit 201, ein Statormodul 300 und einen Läufer 400. Die Steuereinheit 201 ist über eine Datenverbindung 203 mit dem Statormodul 300 verbunden. Die Steuereinheit 201 ist eingerichtet, ein erfindungsgemäßes Verfahren zum Steuern eines Planarantriebssystems 200 auszuführen.

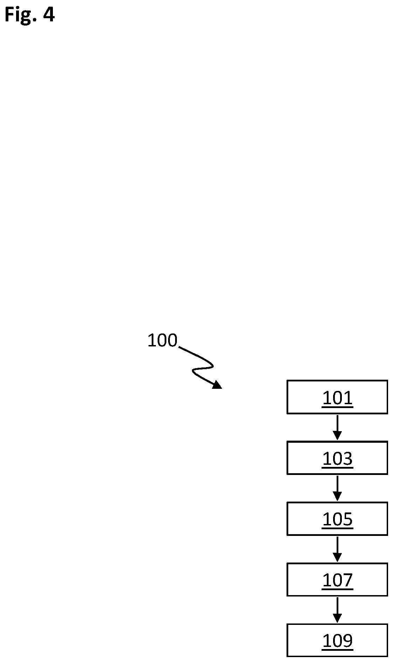

Für eine detaillierte Beschreibung des erfindungsgemäßen Verfahrens zum Steuern eines Planarantriebssystems 200 und der Funktionsweise wird auf die Beschreibung zu den Fig. 4 bis Fig. 7 verwiesen.

Das Statormodul 300 hat eine ebene Statoroberfläche 303. Die ebene Statoroberfläche 303 ist an einer Oberseite eines Statormodulgehäuses 305 angeordnet. Oberhalb der Statoroberfläche 303 ist ein Läufer 400 angeordnet. Die Statoroberfläche 303 ist Teil einer Statoreinheit 307 für einen elektrischen Antrieb des Läufers 400. Die Statoreinheit 307 mit der Statoroberfläche 303 kann als Leiterplatte ausgeführt sein. Die Statoroberfläche 303 ist quadratisch ausgebildet.

Der Läufer 400 ist oberhalb der Statoroberfläche 303 zumindest in eine erste Richtung 507 und in eine zweite Richtung 509 antreibbar. Die Statoroberfläche 303 weist mehrere Statorleiter 309 auf, die in der Ausführungsform in Fig. 1 als Leiterstreifen ausgebildet sind, und die im Wesentlichen entlang der ersten Richtung 507 ausgerichtet sind. Die Statorleiter 309 sind stromleitend ausgebildet und können so bestromt werden, dass der Läufer 400 angetrieben wird. Zwischen den Statorleitern 309 ist ein Statorleiterzwischenraum 311 vorgesehen, durch den die Statorleiter 309 voneinander elektrisch isoliert sind. Unterhalb der Statoroberfläche 303 kann eine weitere Anordnung von Statorleitern vorgesehen sein, in der die Statorleiter 309 im Wesentlichen entlang der zweiten Richtung 509 ausgerichtet sind.

In dem Statormodulgehäuse 305 sind Elektronikmodule (nicht dargestellt) für den Antrieb und für die Steuerung des Läufers 400 angeordnet. Die Elektronikmodule können beispielsweise Leistungsmodule zur Erzeugung der Antriebsströme und Steuermodule zur Steuerung der Leistungsmodule und der Antriebsströme umfassen. Auf einer der Statoroberfläche 303 gegenüberliegenden Statormodulunterseite 332 des Statormodulgehäuses 305 sind nicht dargestellte Anschlüsse angeordnet zur Verbindung des Statormoduls 300 mit mehreren Anschlussleitungen 315. Die Anschlussleitungen 315 können beispielsweise eine Steuerleitung zur Übertragung von Steuersignalen für die Steuermodule und eine Energieversorgungsleitung zur Versorgung der Leistungs- und/oder Steuermodule mit elektrischer Energie umfassen. Insbesondere kann dem Leistungsmodul über die Energieversorgungsleitung elektrische Energie zur Erzeugung der Antriebsströme zugeführt werden.

Das Statormodulgehäuse 305, die Statoreinheit 307 und die Statoroberfläche 303 sind in der Aufsicht auf die Statoroberfläche 303 rechteckig, insbesondere quadratisch, ausgebildet.

Das Statormodulgehäuse 305 weist eine Schnittebene 313 auf. Auf Höhe der Schnittebene 313 kann innerhalb des Statormodulgehäuses 305 ein Sensormodul angeordnet sein.

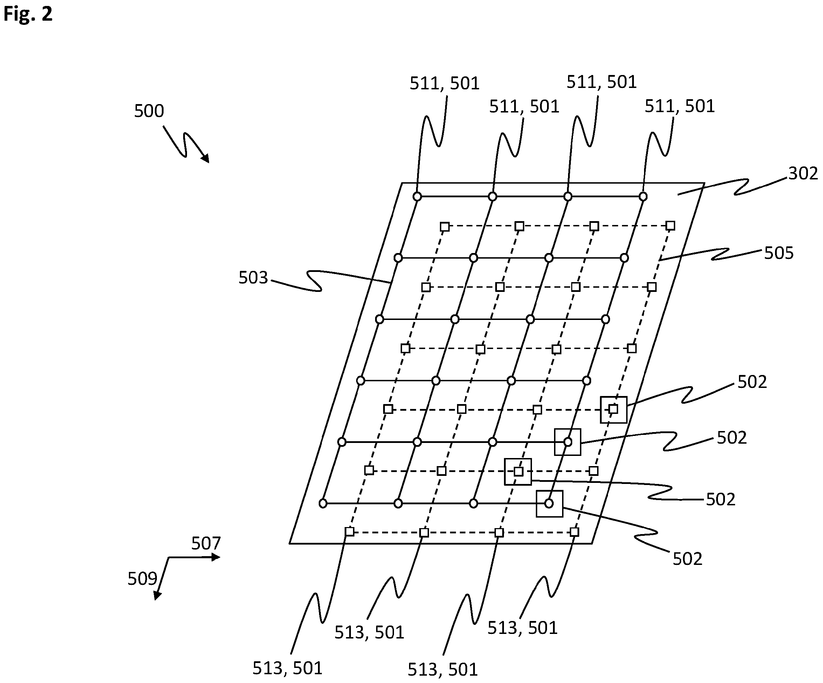

Fig. 2 zeigt eine perspektivische Ansicht auf ein Sensormodul 500 zur Erfassung einer Position des Läufers 400 im Planarantriebssystem 200. Das Sensormodul 500 ist rechteckig und weist eine zweidimensionale Anordnung von Magnetfeldsensoren 501 auf einem Träger 302 des Statormoduls 300 auf. Die Magnetfeldsensoren 501 sind also auf dem Träger 302 angeordnet. Die zweidimensionale Anordnung der Magnetfeldsensoren 501 weist ein erstes periodisches Gitter 503 von Magnetfeldsensoren 501 und ein zweites periodisches Gitter 505 von Magnetfeldsensoren 501 auf. Die Magnetfeldsensoren 501 des ersten Gitters 503 sind durch runde Symbole angedeutet, während die Magnetfeldsensoren 501 des zweiten Gitters 505 durch viereckige Symbole angedeutet sind. Alterativ kann das Sensormodul 500 auch quadratisch, parallelogrammförmig oder andersförmig ausgestaltet sein.

Sofern im Folgenden auf die Magnetfeldsensoren 501 allgemein eingegangen wird, findet das Bezugszeichen 501 Verwendung.

Die ersten Magnetfeldsensoren 511 sind mit durchgezogenen Linien zur Verdeutlichung der Gitterstruktur des ersten Gitters 503 verbunden. Die zweiten Magnetfeldsensoren 513 sind mit gestrichelten Linien zur Verdeutlichung der Gitterstruktur des zweiten Gitters 505 verbunden. Die ersten Magnetfeldsensoren 511 und die zweiten Magnetfeldsensoren 513 können dabei identisch sein, die runden beziehungsweise eckigen Symbole sollen nur die Positionen der Magnetfeldsensoren 501 zugehörig zu den jeweiligen Teilanordnungen symbolisieren.

Das erste Gitter 503 und das zweite Gitter 505 sind identisch aufgebaut und zueinander verschoben. Dadurch sind die zweiten Magnetfeldsensoren 513 des zweiten Gitters 505 und die ersten Magnetfeldsensoren 511 des ersten Gitters 503 jeweils zueinander verschoben.

Die in Fig. 2 dargestellte Anordnung der Magnetfeldsensoren 501 dient ausschließlich der Illustration und kann von der in Fig. 2 dargestellten Form abweichen.

Die Magnetfeldsensoren 501 sind jeweils eingerichtet Magnetfelder für einen Raumbereich 502 zu bestimmen. Messungen eines Magnetfeldsensors 501 sind somit auf den jeweiligen Raumbereich 502 des jeweiligen Magnetfeldsensors 501 beschränkt. In der Ausführungsform in Fig. 2 sind die Raumbereiche 502 als rechteckige beziehungsweise quadratische Flächen dargestellt. Dies ist lediglich darstellerischen Gründen geschuldet. Die Raumbereiche 502 der Magnetfeldsensoren 501 können auch geometrisch anders gestaltete räumliche Ausdehnungen aufweisen und beispielsweise kreisförmig ausgestaltet sein. Insbesondere können die Raumbereiche 502 punktförmig ausgestaltet sein, sodass durch die Magnetfeldsensoren 502 Punktmessungen der jeweiligen Magnetfelder durchgeführt werden können, bei denen einzelne Magnetfeldsensoren 502 ausschließlich Feldbeiträge der jeweiligen Magnetfelder messen, die unmittelbar an der Position der jeweiligen Magnetfeldsensoren 501 angeordnet sind.

Der Träger 302 ist eben, so dass die Magnetfeldsensoren 501 in einer Ebene, also in einer zweidimensionalen Anordnung, angeordnet sind.

Die Magnetfeldsensoren 501 können als Hall-Sensoren ausgebildet sein. Insbesondere können die Magnetfeldsensoren 501 als 2D- oder 3D-Hall-Sensoren ausgebildet sein, wobei 3D-Hall-Sensoren die Magnetfeldkomponenten in drei linear unabhängigen Raumrichtungen messen. Diese Raumrichtungen können insbesondere die erste Richtung 507 und die zweite Richtung 509 sowie eine dritte Richtung senkrecht zur ersten Richtung 507 und zur zweiten Richtung 509 umfassen.

Der Träger 302 kann als eine Leiterplatte und/oder eine Platine ausgebildet sein. Dadurch kann der Träger 302 auf einfachem Weg bereitgestellt werden.

Die Anordnung von Magnetfeldsensoren 501 kann genau zwei Teilanordnungen der zwei Gitter 503, 505 umfassen.

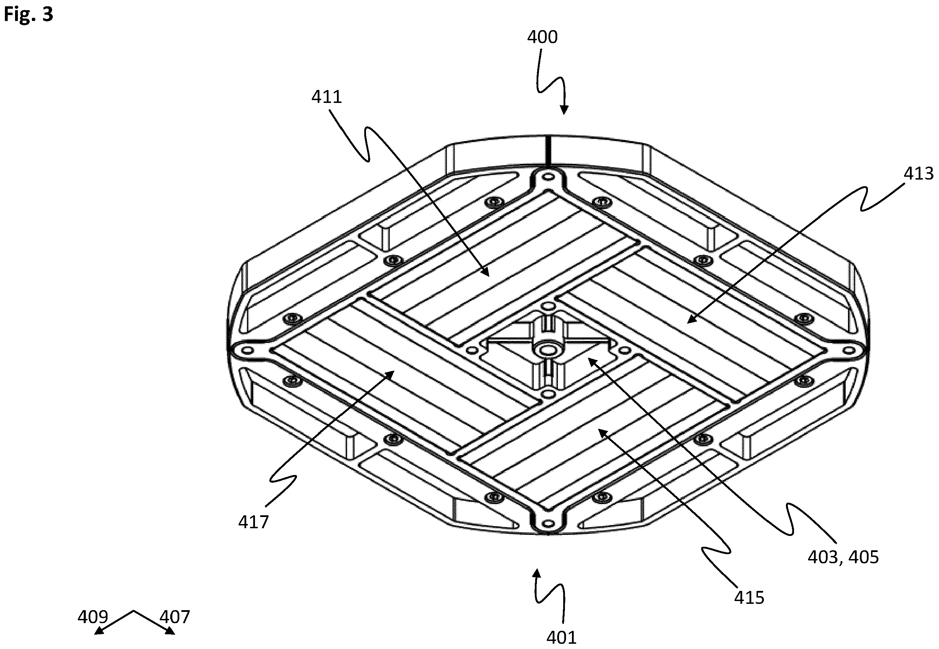

Fig. 3 zeigt den Läufer 400 des Planarantriebssystems 200 in einer Ansicht von unten auf eine Unterseite des Läufers 400. Im Betrieb des Planarantriebssystem 200 ist die Unterseite des Läufers 400 der Statoroberfläche 303 des Statormoduls 300 zugewandt angeordnet. Der Läufer 400 weist an der Unterseite eine Magnetanordnung 401 auf. Die Magnetanordnung 401 ist rechteckig, insbesondere quadratisch, ausgebildet und umfasst mehrere Magneten. Die Unterseite des Läufers 400 ist, insbesondere im Bereich der Magneten der Magnetanordnung 401, eben bzw. planar ausgebildet. Im Betrieb ist die Unterseite des Läufers 400 mit der Magnetanordnung 401 im Wesentlichen parallel zu der Statoroberfläche 303 orientiert und der Statoroberfläche 303 zugewandt angeordnet.

Die Magnetanordnung 401 umfasst eine erste Magneteinheit 411, eine zweite Magneteinheit 413, eine dritte Magneteinheit 415 und eine vierte Magneteinheit 417. Die erste Magneteinheit 411 und die dritte Magneteinheit 415 weisen jeweils in einer ersten Läuferrichtung 407 nebeneinander angeordnete und entlang einer zu der ersten Läuferrichtung 407 senkrecht orientierten zweiten Läuferrichtung 409 ausgedehnte längliche Antriebsmagnete auf. Die zweite Magneteinheit 413 und die vierte Magneteinheit 417 weisen jeweils in der zweiten Läuferrichtung 409 nebeneinander angeordnete und entlang der ersten Läuferrichtung 407 ausgedehnte längliche Antriebsmagnete auf. Die erste Magneteinheit 411 und die dritte Magneteinheit 415 dienen im Betrieb einem Antrieb des Läufers 400 in der ersten Läuferrichtung 407 und die zweite Magneteinheit 413 und die vierte Magneteinheit 417 dienen im Betrieb einem Antrieb des Läufers 400 in der zweiten Läuferrichtung 409. Darüber hinaus dienen die erste Magneteinheit 411, die zweite Magneteinheit 413, die dritte Magneteinheit 415 und die vierte Magneteinheit 417 einem Antrieb in eine Richtung senkrecht zur Statoroberfläche 303 und sowohl senkrecht zur ersten Richtung 507 als auch senkrecht zur zweiten Richtung 509.

In der Mitte der Magnetanordnung 401 weist der Läufer 400 eine Freifläche 403 auf, die nicht von Magneten der Magnetanordnung 401 bedeckt wird. Im Bereich der Freifläche 403 weist der Läufer 400 eine Befestigungsstruktur 405 auf. Alternativ können in der Freifläche 403 weitere Komponenten angeordnet sein.

Fig. 4 zeigt ein Flussdiagramm eines Verfahrens 100 zum Steuern eines Planarantriebssystems 200 gemäß einer Ausführungsform.

Das Verfahren 100 zum Steuern eines Planarantriebssystems 200 ist auf ein Planarantriebssystem 200 gemäß den Ausführungsformen in Fig.1 bis Fig.3 anwendbar.

Gemäß der Ausführungsform in Fig. 4 umfasst ein Planarantriebssystem 200 wenigstens eine Steuereinheit 201, ein Statormodul 300 und einen Läufer 400, wobei das Statormodul 300 eine Mehrzahl von elektrisch bestrombaren Statorleitern 309 zum Erzeugen von Statormagnetfeldern zum elektrischen Steuern des Läufers 400 umfasst, wobei der Läufer 400 eine Magnetanordnung 401 zum Generieren eines Läufermagnetfelds aufweist, wobei über das Statormagnetfeld und das Läufermagnetfeld eine magnetische Kopplung zwischen dem Läufer 400 und dem Statormodul 300 erzielbar ist, wobei das Statormodul 300 zum Bestimmen einer Position des Läufers 400 ein Sensormodul 500 mit einer Mehrzahl von Magnetfeldsensoren 501 umfasst, wobei die Magnetfeldsensoren 501 in einer zweidimensionalen Anordnung am Statormodul 300 angeordnet sind, und wobei jeder Magnetfeldsensor 501 eingerichtet ist, für einen Raumbereich 502 in der zweidimensionalen Anordnung das Läufermagnetfeld zu bestimmen.

Gemäß der Ausführungsform in Fig.4 umfasst das Verfahren 100 die Verfahrensschritte:
Bestimmen einer Mehrzahl von Werten von Statormagnetfeldern für eine Mehrzahl verschiedener Erregerströme und für eine Mehrzahl von Raumbereichen 502 in der zweidimensionalen Anordnung der Magnetfeldsensoren 501 in einem ersten Statormagnetfeldbestimmungsschritt 101;
Generieren wenigstens eines Statormagnetfeldes durch Anlegen entsprechender Erregerströme an entsprechende Statorleiter 309 zum elektrischen Steuern des Läufers 400 in einem Statormagnetfeldgenerierungsschritt 103;
Bestimmen einer Mehrzahl von Messwerten eines Gesamtmagnetfelds durch eine Mehrzahl von Magnetfeldsensoren 501 für eine Mehrzahl von Raumbereichen 502 des Sensormoduls 500 zum Ermitteln einer Position des Läufers 400 in einem Gesamtmagnetfeldbestimmungsschritt 105, wobei das Gesamtmagnetfeld eine Überlagerung der Mehrzahl von Statormagnetfeldern und dem Läufermagnetfeld umfasst;
Kompensieren von Beiträgen der Statormagnetfelder zu den von den Magnetfeldsensoren 501 bestimmten Messwerten des Gesamtmagnetfelds und Generieren von durch die jeweiligen Magnetfeldsensoren 501 für den jeweiligen Raumbereich 502 bestimmten Messwerten des Läufermagnetfelds in einem Kompensationsschritt 107, wobei das Kompensieren eine Subtraktion der für die Erregerströme bestimmten Werte der Statormagnetfelder von den von den Magnetfeldsensoren 501 bestimmten Messwerten des Gesamtmagnetfelds umfasst; und
Ermitteln einer Position des Läufers 400 auf Basis der generierten Messwerte des Läufermagnetfelds in einem Positionsbestimmungsschritt 109.

Gemäß der Ausführungsform in Fig. 4 werden in einem ersten Statormagnetfeldbestimmungsschritt 101 eine Mehrzahl von Werten von Statormagnetfeldern für eine Mehrzahl verschiedener Erregerströme und für eine Mehrzahl von Raumbereichen 502 in der zweidimensionalen Anordnung der Magnetfeldsensoren bestimmt.

Zum Bestimmen der Mehrzahl von Werten von Statormagnetfeldern können beispielsweise an eine Mehrzahl von Statorleitern 309 des Statormoduls 300 verschiedene Erregerströme angelegt werden, um so durch die jeweiligen Statorleiter 309 entsprechende Statormagnetfelder zu generieren. Die generierten Statormagnetfelder können darauffolgend für verschiedene Raumbereiche 502 des Statormoduls 300 gemessen und somit Werte verschiedener Statormagnetfelder für verschiedene Erregerströme bestimmt werden. Beispielsweise können Messungen der Statormagnetfelder durch die Magnetfeldsensoren 501 des Sensormoduls 500 durchgeführt werden. Somit kann für jeden Raumbereich 502 eines Magnetfeldsensors 501 eine Mehrzahl von Messwerten verschiedener Statormagnetfelder für verschiedene Erregerströme bestimmt werden.

Diese Mehrzahl von Werten von Statormagnetfeldern für verschiedene Erregerströme kann in einem Datensatz beziehungsweise einer Mehrzahl von Datensätzen zusammengefasst und beispielsweise in der Steuereinheit 201 des Planarantriebssystems 200 gespeichert werden. In den jeweiligen Datensätzen können somit Zusammenhänge zwischen den an den einzelnen Statorleitern 309 des Statormoduls 300 angelegten Erregerströmen und in den Raumbereichen 502 der zweidimensionalen Anordnung der Magnetfeldsensoren 501 gemessenen Werten von Statormagnetfeldern dokumentiert werden. Die Zusammenhänge zwischen angelegten Erregerströmen und in den jeweiligen Raumbereichen 502 gemessenen Werten von Statormagnetfeldern können später zu einer Kompensation der Beiträge der Statormagnetfelder zu Messwerten eines Gesamtmagnetfelds durch die Magnetfeldsensoren 501 in den jeweiligen Raumbereichen 502 verwendet werden.

Alternativ kann für lediglich einen Raumbereich 502 des Statormoduls 300 eine Mehrzahl von Messungen verschiedener Statormagnetfelder für verschiedene Erregerströme durchgeführt werden und somit für den einen bestimmten Raumbereich 502 eine Mehrzahl von Werten von verschiedenen Statormagnetfeldern generiert werden. Auf Basis dieser Werte von verschiedenen Statormagnetfeldern für verschiedene Erregerströme für den einen bestimmten Raumbereich 502 der zweidimensionalen Anordnung der Magnetfeldsensoren 501 können gemäß einer zuvor bestimmten räumlichen Abbildung Werte der Statormagnetfelder für verschiedene Raumbereiche 502 extrapoliert werden. Auf Basis der Raumabbildung, die es ermöglicht, basierend auf den für den einen Raumbereich 502 bestimmten Werten der Statormagnetfelder entsprechende Werte der Statormagnetfelder für beliebige andere Raumbereiche 502 vorherzusagen, können somit für beliebige Raumbereiche 502 der zweidimensionalen Anordnung von Magnetfeldsensoren 501 Werte von Statormagnetfeldern für beliebige Erregerströme generiert werden. Diese können ebenfalls in einem Datensatz beziehungsweise einer Mehrzahl von Datensätzen hinterlegt und für die Kompensation verwendet werden.

Die Abbildung und Generierung von Werten verschiedener Statormagnetfelder für beliebige Raumbereiche 502 des Statormoduls 300 kann beispielsweise unter Verwendung eines entsprechend trainierten neuronalen Netzes durchgeführt werden. Dieses ermöglicht basierend auf Werten verschiedener Statormagnetfelder, die für einen Raumbereich 502 beziehungsweise für eine geringere Anzahl von Raumbereichen 502 bestimmt wurden, für eine beliebige Anzahl von Raumbereichen 502 des Statormoduls 300 entsprechende Werte der Statormagnetfelder vorherzusagen.

Alternativ zu den in den Datensätzen dokumentierten diskreten Beziehungen zwischen Erregerströmen und Werten der entsprechenden Statormagnetfelder für verschiedene Raumbereiche 502 des Statormoduls 300 können entsprechende Modellbeschreibungen von Abhängigkeiten zwischen Erregerströmen und Statormagnetfeldern, insbesondere zwischen Erregerströmen und Werten der Statormagnetfelder für individuelle Raumbereiche 502 des Statormoduls 300, ermittelt werden. Derartig ermittelte Modellbeschreibungen ermöglichen eine Bestimmung von Werten verschiedener Statormagnetfelder für beliebige Erregerströme, insbesondere für Erregerströme, die bei der Messung der Mehrzahl von Statormagnetfeldern nicht berücksichtigt wurden.

Die Bestimmung von Werten verschiedener Statormagnetfelder für verschiedene Erregerströme kann für eine Mehrzahl von Statorleitern 309 des Statormoduls 300 durchgeführt werden. Insbesondere kann für jeden einzelnen Statorleiter 309 des Statormoduls 300 eine entsprechende Bestimmung verschiedener Statormagnetfelder für unterschiedliche Erregerströme durchgeführt werden.

Die Bestimmung von Werten unterschiedlicher Statormagnetfelder für verschiedene Erregerströme kann für alle Raumbereiche 502 des Statormoduls 300 durchgeführt werden. Alternativ kann die Bestimmung der Werte der verschiedenen Statormagnetfelder für unterschiedliche Erregerströme lediglich für eine zuvor ausgewählte Mehrzahl von Raumbereichen 502 durchgeführt werden, die für die Positionsbestimmung beziehungsweise Steuerung des Läufers 400 von erhöhter Relevanz sind.

Zur Bestimmung der Werte der Statormagnetfelder für verschiedene Raumbereiche 502 können Messungen der einzelnen Magnetfeldsensoren 501 des Sensormoduls 500 der entsprechenden Raumbereiche 502 durchgeführt werden. Hierzu kann insbesondere für jeden Raumbereich 502 durch den jeweiligen Magnetfeldsensor 501 eine entsprechende Mehrzahl von Messwerten aufgenommen werden. Alternativ können Messwerte lediglich für eine bestimmte Mehrzahl von Raumbereichen 502 durch die entsprechenden Magnetfeldsensoren 501 aufgenommen werden. Alternativ können Messwerte der verschiedenen Statormagnetfelder für unterschiedliche Raumbereiche 502 durch Sensoren aufgenommen werden, die keine Magnetfeldsensoren 501 des Sensormoduls 500 des Statormoduls 300 sind. Beispielsweise können Messungen durch eine externe Sensormessanordnung durchgeführt werden und hierdurch die Mehrzahl von Werten unterschiedlicher Statormagnetfelder bestimmt werden.

Die erstellten Datensätze mit den bestimmten Werten der verschiedenen Statormagnetfelder für die unterschiedlichen Erregerströme und die verschiedenen Raumbereiche 502 des Statormoduls 300 können neben der Steuereinheit 201 in weiteren Datenverarbeitungseinheiten oder Datenspeichereinheiten des Planarantriebssystems 200 gespeichert werden.

Der erste Statormagnetfeldbestimmungsschritt 101 kann vor Inbetriebnahme des Planarantriebssystems 200, insbesondere des Statormoduls 300, durchgeführt werden. Beispielsweise kann eine Bestimmung der Statormagnetfelder gemäß dem ersten Statormagnetfeldbestimmungsschritt 101 werkseitig nach Produktion der entsprechenden Komponenten, insbesondere des Statormoduls 300, durchgeführt werden. Alternativ kann eine Bestimmung der Werte der unterschiedlichen Statormagnetfelder nach Inbetriebnahme des Planarantriebssystems 200 und für ein bereits verbautes Statormodul 300 durchgeführt werden. Insbesondere kann das Bestimmen der Werte der Statormagnetfelder gemäß dem ersten Statormagnetfeldbestimmungsschritt 101 während des Betriebs des Planarantriebssystems 200 durchgeführt werden. Beispielsweise kann eine entsprechende Bestimmung gemäß dem ersten Statormagnetfeldbestimmungsschritt 101 bei jedem in Betrieb nehmen oder setzen bzw. Starten des Planarantriebssystems 200 durchgeführt werden. Alternativ kann der erste Statormagnetfeldbestimmungsschritt 101 gemäß einem vorbestimmten Zeitplan, beispielsweise im Zuge einer Wartung des Planarantriebssystems 200, durchgeführt werden.

Nach Durchführung des ersten Statormagnetfeldbestimmungsschritts 101 werden in einem Statormagnetfeldgenerierungsschritt 103 Statormagnetfelder zum Steuern des Läufers 400 durch Anlegen entsprechender Erregerströme an eine Mehrzahl von Statorleitern 309 des Statormoduls 300 generiert. Durch das Anlegen der Erregerströme an die entsprechenden Statorleiter 309 und das dadurch bewirkte Generieren der entsprechenden Statormagnetfelder kann eine entsprechende Positionierung des Läufers 400 auf dem Statormodul 300 erzielt werden. Für eine genaue Positionierung des Läufers 400 durch die entsprechend generierten Statormagnetfelder ist eine Positionsbestimmung des Läufers 400 relativ zum Statormodul 300 notwendig.

Hierzu wird in einem Gesamtmagnetfeldbestimmungsschritt 105 eine Mehrzahl von Messwerten eines Gesamtmagnetfelds durch eine Mehrzahl von Magnetfeldsensoren 501 für die entsprechenden Raumbereiche 502 des Statormoduls 300 aufgenommen. Die Aufnahme der Messwerte durch die Magnetfeldsensoren 501 im Gesamtmagnetfeldbestimmungsschritt 105 dient zur Bestimmung von Werten des Läufermagnetfelds des Läufers 400 für die entsprechenden Raumbereiche 502 der jeweils die Messwerte aufnehmenden Magnetfeldsensoren 501. Durch die Ansteuerung des Läufers 400 durch das Statormodul 300 durch das Ansteuern der entsprechenden Statormagnetfelder sind die Magnetfeldsensoren 501 jedoch nicht in der Lage, ausschließlich das Läufermagnetfeld des Läufers 400 zu messen.

Stattdessen messen die Magnetfeldsensoren 501 ein Gesamtmagnetfeld, das neben dem Läufermagnetfeld des Läufers 400 eine Überlagerung der Statormagnetfelder des Statormoduls 300 umfasst. Durch die Überlagerung des Läufermagnetfelds mit den zum Steuern des Läufers 400 benötigten Statormagnetfeldern werden durch die Magnetfeldsensoren 501 die Messwerte des Läufermagnetfelds verfälscht. Hierdurch wird eine Positionsbestimmung des Läufers 400 relativ zum Statormodul 300 aufgrund der verfälschten Messwerte der Magnetfeldsensoren 501 des Läufermagnetfelds des Läufers 400 für die Raumbereiche 502 der jeweiligen Magnetfeldsensoren 501 erschwert. Zur Bestimmung des Läufermagnetfelds aus den Messwerten des Gesamtmagnetfelds der einzelnen Magnetfeldsensoren 501 für die jeweiligen Raumbereiche 502 ist somit eine Kompensation der Beiträge der Statormagnetfelder zu den Messwerten der einzelnen Magnetfeldsensoren 501 notwendig.

Hierzu wird in einem Kompensationsschritt 107 eine Kompensation der Beiträge der Statormagnetfelder des Statormoduls 300 zu den von den Magnetfeldsensoren 501 bestimmten Messwerten des Gesamtmagnetfelds für die jeweiligen Raumbereiche 502 des Statormoduls 300 durchgeführt. Eine Kompensation umfasst hierbei eine Subtraktion der im ersten Statormagnetfeldbestimmungsschritt 101 bestimmten Werte der Statormagnetfelder für die jeweiligen Raumbereiche 502 von den im Gesamtmagnetfeldbestimmungsschritt 105 bestimmten Messwerten des Gesamtmagnetfelds für die jeweiligen Raumbereiche 502. Aufgrund der Superposition der Statormagnetfelder und des Läufermagnetfelds kann durch die Subtraktion der im ersten Statormagnetfeldbestimmungsschritt 101 bestimmten Werte der Statormagnetfelder für die jeweiligen Raumbereiche 502 von den für die Raumbereiche 502 gemessenen Messwerten des Gesamtmagnetfelds für die jeweiligen Raumbereiche 502 Werte des Läufermagnetfelds generiert werden.

Hierzu können beispielsweise die für die einzelnen Raumbereiche 502 durch die jeweiligen Magnetfeldsensoren 501 aufgenommenen Messwerte des Gesamtmagnetfelds entsprechenden Datensätze zusammengefasst werden und beispielsweise durch die Steuereinheit 201 mit den jeweiligen im ersten Statormagnetfeldbestimmungsschritt 101 generierten Datensätzen der Werte der Statormagnetfelder für die jeweiligen Raumbereiche 502 generierten Datensätze verarbeitet werden. Alternativ kann die Kompensation neben der Steuereinheit 201 durch eine weitere Datenverarbeitungseinheit des Planarantriebssystems 200 durchgeführt werden. Eine Kompensation der Beiträge der verschiedenen Statormagnetfelder zu den Messwerten des Gesamtmagnetfelds der einzelnen Magnetfeldsensoren 501 und das damit verbundene Generieren der Werte des Läufermagnetfelds für die jeweiligen Raumbereiche 502 kann somit nach jeder Messung des Gesamtmagnetfelds durch die jeweiligen Magnetfeldsensoren 501 durchgeführt werden. Eine entsprechende Datenübertragung der aufgenommenen Messwerte an die Steuereinheit 201 kann durch die Datenverbindung 203 realisiert sein.

Die Kompensation der Beiträge der Statormagnetfelder zu den durch die einzelnen Magnetfeldsensoren 501 gemessenen Messwerte des Gesamtmagnetfelds umfasst eine Kompensation der Magnetfeldstärken beziehungsweise der Amplituden der gemessenen magnetischen Flussdichte sowie eine Kompensation der Beiträge zu den Magnetfeldrichtungen beziehungsweise den Winkeln der gemessenen magnetischen Flussdichten. Die im Kompensationsschritt 107 generierten Werte des Läufermagnetfelds sind somit in Bezug auf die Magnetfeldstärke beziehungsweise die Amplitude als auch in Bezug auf die Magnetfeldrichtung beziehungsweise den Winkel von den jeweiligen Beiträgen der Statormagnetfelder bereinigt. Hierdurch ist eine präzise Bestimmung des Läufermagnetfelds für die einzelnen Raumbereiche 502 des Statormoduls 300 ermöglicht.

Nach Generieren der Werte des Läufermagnetfelds im Kompensationsschritt 107 wird in einem Positionsbestimmungsschritt 109 auf Basis der generierten Werte des Läufermagnetfelds für die einzelnen Raumbereiche 502 des Statormoduls 300 eine Positionsbestimmung des Läufers 400 relativ zum Statormodul 300 durchgeführt. Durch die im Kompensationsschritt 107 bereinigten Messwerte der Magnetfeldsensoren 501, die nach erfolgreicher Kompensation bereinigte Werte des Läufermagnetfelds des Läufers 400 anzeigen, ist eine präzise Positionsbestimmung und damit verbunden eine präzise Positionierung auf Basis der gemessenen Werte des Läufermagnetfelds für die jeweiligen Raumbereiche 502 des Statormoduls 300 und somit eine präzise Steuerung des Läufers 400 ermöglicht.

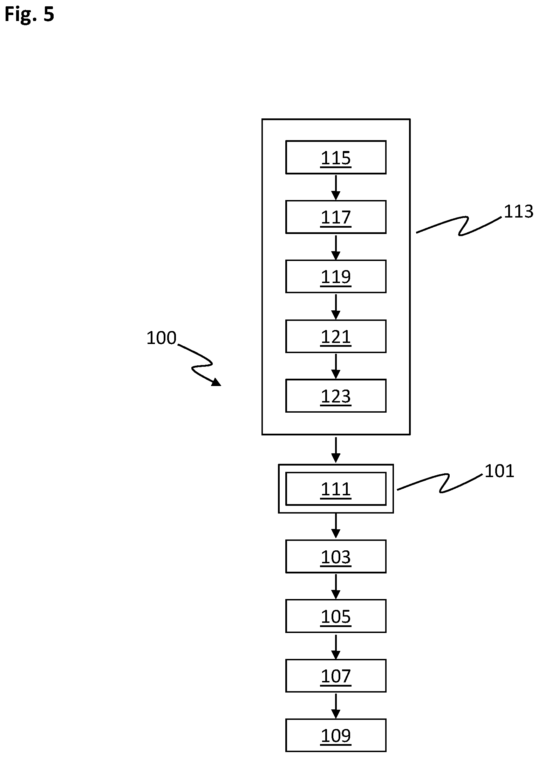

Fig. 5 zeigt ein weiteres Flussdiagramm des Verfahrens 100 zum Steuern eines Planarantriebssystems 200 gemäß einer Ausführungsform.

Die in Fig. 5 dargestellte Ausführungsform basiert auf der Ausführungsform in Fig. 4 und umfasst alle Verfahrensschritte der Ausführungsform in Fig. 4. Die zur Fig. 4 beschriebenen Verfahrensschritte werden im Folgenden zur Vermeidung unnötiger Wiederholungen nicht erneut detailliert beschrieben.

Abweichend von der Ausführungsform in Fig. 4 weist die Ausführungsform in Fig. 5 ferner einen Kalibrierschritt 113 zum Kalibrieren der Statorleiter 309 des Statormoduls 300 auf. In der Ausführungsform in Fig. 5 umfasst der Kalibrierschritt 113 hierzu einen Sollstatormagnetfeldbestimmungsschritt 115. Im Sollstatormagnetfeldbestimmungsschritt 115 wird eine Mehrzahl von Sollstatormagnetfeldern für eine Mehrzahl von Sollerregerströmen für eine Mehrzahl von Statorleitern 309 bestimmt. Ein Sollstatormagnetfeld eines Statorleiters 309 entspricht hierbei einem Magnetfeld eines idealen Referenzleiters mit gleichen Parametern wie der jeweilige Statorleiter 309 für einen jeweiligen Sollerregerstrom. Die Parameter des Statorleiters 309 können hierbei Charakteristiken des Leitermaterials des Statorleiters 309 oder Wicklungen des Statorleiters 309, wenn dieser als eine Spule ausgebildet ist, sein.

Das Sollstatormagnetfeld entspricht somit dem Magnetfeld, das für einen idealen Statorleiter 309 für einen entsprechenden am Statorleiter 309 angelegten Sollerregerstrom zu erwarten wäre. Ideal bedeutet in diesem Fall, dass der jeweilige Statorleiter 309 keine produktionsbedingten Ungenauigkeiten beziehungsweise Abweichungen von dessen definierten Charakteristiken aufweist. Darüber hinaus ist der ideale Statorleiter 309 exakt an der gewünschten Position am Statormodul 300 angeordnet, sodass dieser ebenfalls keine positionsbedingten Abweichungen aufweist.

Im Sollstatormagnetfeldbestimmungsschritt 115 können für alle Statorleiter 309 des Statormoduls 300 entsprechende Sollstatormagnetfelder bestimmt werden. Alternativ können abweichend lediglich für eine ausgewählte Mehrzahl von Statorleitern 309 entsprechende Sollstatormagnetfelder bestimmt werden. Die Sollstatormagnetfelder können für eine beliebige Anzahl verschiedener Sollerregerströme bestimmt werden. Die Sollstatormagnetfelder können im Sollstatormagnetfeldbestimmungsschritt 115 beispielsweise durch entsprechende Messungen an entsprechenden idealen Referenzleitern durchgeführt werden.

Nach Bestimmen der Sollstatormagnetfelder im Sollstatormagnetfeldbestimmungsschritt 115 werden in einem Generierungsschritt 117 auf Basis der Sollerregerströme reale Statormagnetfelder generiert. Ein reales Statormagnetfeld eines Statorleiters 309 ist hierbei das Magnetfeld, das bei Anlegen eines jeweiligen Sollerregerstroms durch den jeweiligen Statorleiter 309 tatsächlich generiert wird. Ist der jeweilige Statorleiter 309 kein idealer Referenzleiter, so weicht das reale Statormagnetfeld des jeweiligen Statorleiters 309 von dem im Sollstatormagnetfeldbestimmungsschritt 115 für den jeweiligen Sollerregerstrom bestimmten Sollstatormagnetfeld ab. Eine Abweichung kann insbesondere sowohl in Form der Magnetfeldstärke beziehungsweise der Amplitude der gemessenen magnetischen Flussdichte als auch in der Magnetfeldrichtung beziehungsweise dem Winkel der gemessenen magnetischen Flussdichte für einen beliebigen Raumpunkt auftreten. Das Sollstatormagnetfeld wie auch das reale Statormagnetfeld können homogene und/oder inhomogenen Feldkomponenten umfassen. Im Generierungsschritt 117 werden somit für die einzelnen Statorleiter 309 des Statormoduls 300 durch Anlegen der entsprechenden Sollerregerströme aus dem Sollstatormagnetfeldbestimmungsschritt 115 reale Statormagnetfelder generiert.

In einem zweiten Statormagnetfeldbestimmungsschritt 119 werden die Werte, der im Generierungsschritt 117 generierten, realen Statormagnetfelder bestimmt. Dies kann beispielsweise durch eine Mehrzahl von Messungen einer Mehrzahl von Magnetfeldsensoren 501 des Sensormoduls 500 erfolgen. Alternativ kann die Bestimmung der Werte der realen Statormagnetfelder im zweiten Statormagnetfeldbestimmungsschritt 119 auch durch eine externe Sensoreinheit, sprich durch eine Sensoreinheit, die nicht ein Magnetfeldsensor 501 des Sensormoduls 500 ist, durchgeführt werden.

In einem Zuordnungsschritt 121 werden Zuordnungen zwischen den Sollerregerströmen und den entsprechenden realen Statormagnetfeldern, die im zweiten Statormagnetfeldbestimmungsschritt 119 bestimmt wurden, für eine Mehrzahl von Statorleitern 309 definiert. Durch die definierten Zuordnungen kann für jeden der Mehrzahl von Statorleitern 309 für jeden der Sollerregerströme das reale Statormagnetfeld des jeweiligen Statorleiters 309 bestimmt werden. Durch die jeweilige Zuordnung zwischen den Sollerregerströmen und den entsprechenden realen Statormagnetfeldern für jede der Mehrzahl von Statorleitern 309 kann jeder Statorleiter 309 in Bezug auf das von dem jeweiligen Statorleiter 309 generierte reale Statormagnetfeld angesteuert werden, indem ein entsprechender Sollerregerstrom an den jeweiligen Statorleiter 309 angelegt wird.

Darauffolgend wird in einem Erregerstrombestimmungsschritt 123 auf Basis der im Zuordnungsschritt 121 bestimmten Zuordnungen für jeden der Mehrzahl von Statorleitern 309 entsprechende reale Erregerströme bestimmt. Ein realer Erregerstrom eines Statorleiters 309 entspricht hierbei einem Sollerregerstrom, der an den jeweiligen Statorleiter 309 anzulegen ist, um das jeweilige reale Statorfeld des entsprechenden Statorleiters 309 zu generieren.

Die im Erregerstrombestimmungsschritt 123 definierten realen Erregerströme und die im zweiten Statormagnetfeldbestimmungsschritt 119 bestimmten realen Statormagnetfelder für jeden der Mehrzahl von Statorleitern 309 können in entsprechenden Datensätzen zusammengefasst werden. Auf Basis der Datensätze kann jeder der Mehrzahl von Statorleitern 309 entsprechend angesteuert werden, indem ein realer Erregerstrom angelegt wird, um ein entsprechendes reales Statormagnetfeld des jeweiligen Statorleiters 309 mit einer gewünschten Feldstärke und -Richtung zu erzeugen. Die erzeugten Datensätze können beispielsweise in der Steuereinheit 201 des Planarantriebssystems 200 zum Ansteuern des Statormoduls 300 gespeichert sein.

Alternativ können die Datensätze in dem Steuermodul des Statormoduls 300 gespeichert sein. Die in den Datensätzen gespeicherten Werte der realen Statormagnetfelder können Werte einer Magnetfeldstärke des Statormagnetfelds beziehungsweise einer Amplitude der jeweiligen gemessenen magnetischen Flussdichte und einer Magnetfeldrichtung des Statormagnetfelds beziehungsweise eines Winkels der gemessenen magnetischen Flussdichte umfassen.

Durch die Kalibrierung der Statorleiter 309 des Statormoduls 300 kann eine präzise Steuerung des Läufers 400 erzeugt werden, indem exakt die gewünschten Statormagnetfelder durch Anlegen der jeweiligen realen Erregerströme an die entsprechenden Statorleiter 309 generiert werden können.

Abweichend zu der Ausführungsform in Fig. 4 umfasst in der Ausführungsform in Fig. 5 der erste Statormagnetfeldbestimmungsschritt 101 einen Modellbestimmungsschritt 111. Im Modellbestimmungsschritt 111 werden Modellbeschreibungen von Abhängigkeiten zwischen den Erregerströmen und den Statormagnetfeldern der einzelnen Statorleiter 309 bestimmt. Auf Basis der Modellbeschreibungen lassen sich Statormagnetfelder für beliebige Erregerströme für die einzelnen Statorleiter 309 bestimmen. Eine Kompensation der Beiträge der Statormagnetfelder der Statorleiter 309 im Kompensationsschritt 107 kann auf Basis der im Modellbestimmungsschritt 111 bestimmten Modellbeschreibungen durchgeführt werden.

Eine Modellbeschreibung kann beispielsweise eine mathematische Funktion oder eine mathematische Relation umfassen, mittels der Zuordnungen zwischen Erregerströmen und Statormagnetfeldern ermöglicht sind. Auf Basis der Modellbeschreibungen lassen sich für beliebige Statorleiter 309 und für beliebige Raumpunkte, insbesondere für beliebige Raumbereiche 502 beliebiger Magnetfeldsensoren 501, zu erwartenden Werte entsprechender Statormagnetfelder bestimmen.

Gemäß einer Ausführungsform können die Modellbeschreibungen wenigstens ein entsprechend trainiertes Neuronales Netz umfassen. Alternativ können die Modellbeschreibungen eine Mehrzahl von entsprechend trainierten Neuronalen Netzen umfassen. Mittels der Neuronalen Netze lassen sich Zuordnungen zwischen Erregerströmen und Statormagnetfeldern erstellen. Alternativ lassen sich mittels der entsprechend trainierten Neuronalen Netze für beliebige Statorleiter 309 und für beliebige Raumpunkte, insbesondere für beliebige Raumbereiche 502 beliebiger Magnetfeldsensoren 501, zu erwartenden Werte entsprechender Statormagnetfelder bestimmen. Die Neuronalen Netze können dabei mit den beschriebenen Datensätzen trainiert werden. Durch die Kalibrierung der Statorleiter 309 kann ferner eine Abweichung der durch die Statorleiter 309 generierten realen Magnetfelder aufgrund einer fehlerhaften Strommessung der angelegten Erregerströme korrigiert werden.

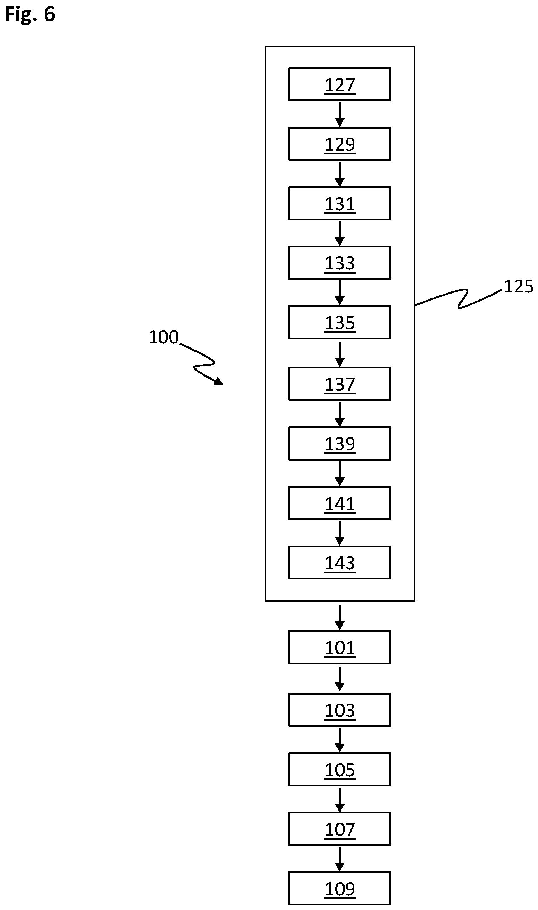

Fig. 6 zeigt ein weiteres Flussdiagramm des Verfahrens 100 zum Steuern eines Planarantriebssystems 200 gemäß einer weiteren Ausführungsform.

Die Ausführungsform in Fig. 6 basiert auf der Ausführungsform in Fig. 4 und umfasst alle Verfahrensschritte der in Fig. 4 dargestellten Ausführungsform. Zur Vermeidung unnötiger Wiederholungen werden die zu Fig. 4 beschriebenen Verfahrensschritte im Folgenden nicht detailliert beschrieben.

Abweichend zu der Ausführungsform in Fig. 4 umfasst die Ausführungsform in Fig. 6 ferner einen Sensorkalibrierschritt 125. Im Sensorkalibrierschritt 125 werden die Magnetfeldsensoren 501 des Sensormoduls 500 kalibriert.

Hierzu umfasst der Sensorkalibrierschritt 125 einen ersten Referenzmagnetfeldgenerierungsschritt 127. Im ersten Referenzmagnetfeldgenerierungsschritt 127 wird ein erstes Referenzmagnetfeld generiert. Für das erste Referenzmagnetfeld sind Werte für eine Mehrzahl von Raumbereichen 502 des Statormoduls 300 bekannt. Das erste Referenzmagnetfeld kann beispielsweise das Läufermagnetfeld des Läufers 400 sein. Alternativ kann das erste Referenzmagnetfeld ein Statormagnetfeld des Statormoduls 300 sein. Alternativ kann das erste Referenzmagnetfeld ein Magnetfeld einer externen Magnetfeldanordnung sein, für die Werte für die jeweiligen Raumbereiche 502 des Statormoduls 300 bekannt sind. Beispielsweise kann die externe Magnetfeldanordnung eine Versuchsanordnung mit einer Magnetfeldquelle sein, die ein Magnetfeld bekannter Charakteristik generiert.

Nach Generierung des ersten Referenzmagnetfelds wird in einem ersten Referenzmagnetfeldbestimmungsschritt 129 eine Mehrzahl von Messwerten des ersten Referenzmagnetfelds für eine Mehrzahl von Raumbereichen 502 des Statormoduls 300 bestimmt. Dies wird durch die Aufnahme einer Mehrzahl von Messwerten durch die jeweiligen Magnetfeldsensoren 501 der jeweiligen Raumbereiche 502 des Statormoduls 300 bewirkt. Hierzu kann der Läufer 400 beispielsweise über das Statormodul 300 bewegt werden und es können durch die jeweiligen Magnetfeldsensoren 501 des Sensormoduls 500 für die entsprechenden Raumbereiche 502 der Magnetfeldsensoren 501 Messwerte des Läufermagnetfelds des Läufers 400 aufgenommen werden. Alternativ können entsprechende Erregerströme an die jeweiligen Statorleiter 309 des Statormoduls 300 angelegt werden, um entsprechende Statormagnetfelder zu generieren, die durch die jeweiligen Magnetfeldsensoren 501 für die entsprechenden Raumbereiche 502 gemessen werden.

Nach Erstellen der Messwerte des ersten Referenzmagnetfelds durch die Mehrzahl von Magnetfeldsensoren 501 werden in einem Abweichungsbestimmungsschritt 131 für die Mehrzahl von Magnetfeldsensoren 501 Abweichungen der durch die Magnetfeldsensoren 501 ermittelten Messwerte des Referenzmagnetfelds zu den tatsächlichen Werten des ersten Referenzmagnetfelds für die jeweiligen Raumbereiche 502 der entsprechenden Magnetfeldsensoren 501 bestimmt. Die tatsächlichen Werte des ersten Referenzmagnetfelds sind die für eine Mehrzahl von Raumbereichen 502 bekannten Werte des ersten Referenzmagnetfelds.

Nach Bestimmen der Abweichungen der Messwerte der einzelnen Magnetfeldsensoren 501 von den tatsächlichen Werten des ersten Referenzmagnetfelds für die jeweiligen Raumbereiche 502 werden in einem ersten Korrekturschritt 133 Korrekturen der durch die Magnetfeldsensoren 501 ermittelten Messwerte durchgeführt. Die Korrekturen können beispielsweise das Abziehen eines Offsets oder aber die Multiplikation der aufgenommenen Messwerte mit einem entsprechenden Korrekturfaktor umfassen.

Die Korrekturen im ersten Korrekturschritt 133 können durch ein entsprechend trainiertes Neuronales Netz oder durch eine Mehrzahl entsprechend trainierter Neuronaler Netze durchgeführt werden.

Das erste Referenzmagnetfeld kann verschiedene Magnetfeldstärken und Magnetfeldrichtungen umfassen. Für jeden Magnetfeldsensor 501 können somit eindeutige Zusammenhänge zwischen aufgenommenen Messwerten und tatsächlichen Werten des ersten Referenzmagnetfelds bestimmt werden. Die bestimmten Zusammenhänge können in entsprechenden Datensätzen für jeden Magnetfeldsensor 501 zusammengefasst sein. Die jeweiligen Datensätze können beispielsweise in der Steuereinheit 201 des Planarantriebssystems 200 gespeichert sein. Alternativ können die Datensätze im Steuermodul des Statormoduls 300 gespeichert sein.

Der Sensorkalibrierschritt 125 umfasst ferner einen Temperaturbestimmungsschritt 135, in dem eine Mehrzahl von Temperaturen des Statormoduls 300 bestimmt werden. Über die Bestimmung der Temperaturen des Statormoduls 300 kann eine Bestimmung von Temperaturen der einzelnen Magnetfeldsensoren 501 des Sensormoduls 500 erreicht werden.

Darauffolgend wird in einem zweiten Referenzmagnetfeldgenerierungsschritt 137 ein zweites Referenzmagnetfeld generiert. Das zweite Referenzmagnetfeld kann analog zum ersten Referenzmagnetfeld das Läufermagnetfeld des Läufers 400 sein. Alternativ kann das zweite Referenzmagnetfeld ein Statormagnetfeld des Statormoduls 300 sein. Alternativ kann das zweite Referenzmagnetfeld ein Magnetfeld einer externen Magnetanordnung sein.

Nach Generieren des zweiten Referenzmagnetfelds im zweiten Referenzmagnetfeldgenerierungsschritt 137 wird in einem zweiten Referenzmagnetfeldbestimmungsschritt 139 eine Mehrzahl von Messwerten des zweiten Referenzmagnetfelds durch eine Mehrzahl von Messungen einer Mehrzahl von Magnetfeldsensoren 501 bestimmt. Analog zu dem ersten Referenzmagnetfeldbestimmungsschritt 129 können hierbei beliebige Messungen einer beliebigen Anzahl von Magnetfeldsensoren 501 durchgeführt werden, um entsprechende Werte des zweiten Referenzmagnetfelds für die jeweiligen Raumbereiche 502 der Magnetfeldsensoren 501 zu bestimmen. Die einzelnen Messungen des zweiten Referenzmagnetfelds für die jeweiligen Raumbereiche 502 der Magnetfeldsensoren 501 werden hierbei für eine Mehrzahl verschiedener Temperaturen des Statormoduls 300 durchgeführt, sodass für einzelne Magnetfeldsensoren 501 für verschiedene Temperaturen des Statormoduls 300 verschiedene Messwerte des zweiten Referenzmagnetfelds aufgenommen werden.

Nach Aufnahme der Mehrzahl von Messwerten durch die verschiedenen Magnetfeldsensoren 501 für die unterschiedlichen Temperaturen des Statormoduls 300 werden in einem Abhängigkeitsbestimmungsschritt 141 für jeden Magnetfeldsensor 501 Temperaturabhängigkeiten zwischen den Messwerten der jeweiligen Magnetfeldsensoren 501 des zweiten Referenzmagnetfelds und den tatsächlichen Werten des zweiten Referenzmagnetfelds für die jeweiligen Raumbereiche 502 der jeweiligen Magnetfeldsensoren 501 bestimmt. Auf Basis der Temperaturabhängigkeiten ist somit eine Bestimmung einer temperaturbedingten Abweichung der von den Magnetfeldsensoren 501 aufgenommenen Messwerte von den tatsächlichen Werten des angelegten zweiten Referenzmagnetfelds für die jeweiligen Raumbereiche 502 der jeweiligen Magnetfeldsensoren 501 ermöglicht.

Darauffolgend werden in einem zweiten Korrekturschritt 143 auf Basis der bestimmten Temperaturabhängigkeiten der einzelnen Magnetfeldsensoren 501 Messwerte der jeweiligen Magnetfeldsensoren 501 korrigiert. Die Korrekturen können herbei Messwerte des Gesamtmagnetfelds, Messwerte des Läufermagnetfelds und/oder Messwerte des Statormagnetfelds der einzelnen Magnetfeldsensoren 501 umfassen.

Die im Abhängigkeitsbestimmungsschritt 141 bestimmten Temperaturabhängigkeiten können durch entsprechende mathematische Modelle ausgedrückt sein, die eine durchgehende Temperaturabhängigkeit für verschiedene Temperaturen in einem Temperaturbereich der Abweichungen der Messwerte einzelner Magnetfeldsensoren 501 zu tatsächlich angelegten Magnetfeldern umfassen. Die Korrekturen im zweiten Korrekturschritt 143 können basierend auf den Modellbeschreibungen der Temperaturabhängigkeiten durchgeführt werden. Die Temperaturabhängigkeiten können in entsprechenden Datensätzen für einzelne Magnetfeldsensoren 501 zusammengefasst sein. Die jeweiligen Datensätze können beispielsweise in der Steuereinheit 201 oder in dem Steuermodul des Statormoduls 300 oder einer externen Datenverarbeitungseinheit oder Datenspeichereinheit gespeichert sein.

Die verschiedenen Temperaturen im Temperaturbestimmungsschritt 135 können beispielsweise durch ein Aufheizen oder ein Abkühlen des Statormoduls 300 realisiert sein. Das Aufheizen des Statormoduls 300 kann über die Wärmeverluste der Statorleiter 309 oder durch eine externe Wärmequelle erfolgen, wobei ersteres während des Betriebs des Planarantriebssystems möglich wäre. Durch den zweiten Korrekturschritt 143 kann eine Kompensation temperaturbedingter Einflüsse auf die Messwerte der Magnetfeldsensoren 501 erreicht werden. Hierdurch kann wiederum eine Erhöhung der Messgenauigkeit der einzelnen Magnetfeldsensoren 501 erreicht werden. Dies trägt wiederum zu einer Verbesserung der Genauigkeit der Positionsbestimmung des Läufers 400 und damit verbunden zu einer Verbesserung der Steuerung des Läufers 400 bei.

Alternativ können das erste Referenzmagnetfeld und das zweite Referenzmagnetfeld ein identisches Magnetfeld sein.

Durch die Durchführung des Sensorkalibrierschritts 125 können sensorinterne Fehler sowie Fehlpositionierungen der Magnetfeldsensoren 501 im Sensormodul 500 des Statormoduls 300 korrigiert werden. Ferner können temperaturbedingte Ungenauigkeiten der einzelnen Magnetfeldsensoren 501 ausgeglichen werden. Hierdurch kann eine erhöhte Präzision und Messgenauigkeit der Magnetfeldsensoren 501 bewirkt werden.

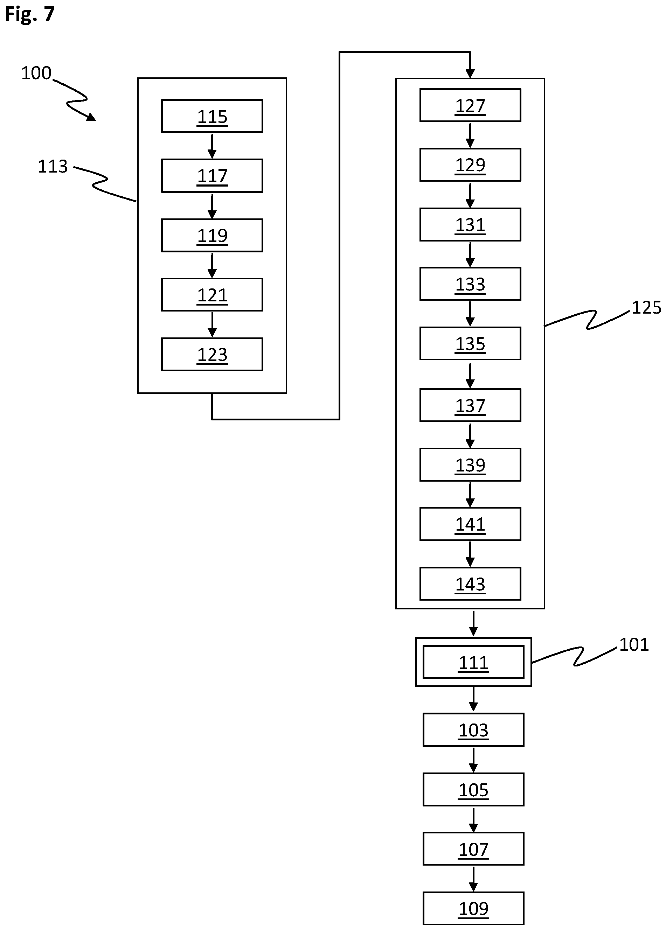

Fig. 7 zeigt ein weiteres Flussdiagramm des Verfahrens 100 zum Steuern eines Planarantriebssystems 200 gemäß einer weiteren Ausführungsform.

Die Ausführungsform in Fig. 7 entspricht einer Kombination der Ausführungsformen in Fig. 5 und Fig. 6.

Durch die Kalibrierung der Statorleiter 309 im Kalibrierschritt 113 und durch die Kalibrierung der Magnetfeldsensoren 501 im Sensorkalibrierschritt 125 kann eine verbesserte Kompensation der Beiträge der Statormagnetfelder zu den Messwerten des Gesamtmagnetfelds der einzelnen Magnetfeldsensoren 501 im Kompensationsschritt 107 erreicht werden. Durch die verbesserte Kompensation aufgrund der erhöhten Messgenauigkeit der Magnetfeldsensoren 501 und der verbesserten Kenntnis der durch die Statorleiter 309 des Statormoduls 300 erzeugten Statormagnetfelder kann eine verbesserte Positionsbestimmung einer Position des Läufers 400 relativ zum Statormodul 300 und damit verbunden eine verbesserte Steuerung des Läufers 400 erreicht werden.

### Bezugszeichenliste

- 100: Verfahren zum Steuern eines Planarantriebssystems
- 101: erster Statormagnetfeldbestimmungsschritt
- 103: Statormagnetfeldgenerierungsschritt
- 105: Gesamtmagnetfeldbestimmungsschritt
- 107: Kompensationsschritt
- 109: Positionsbestimmungsschritt
- 111: Modellbestimmungsschritt
- 113: Kalibierschritt
- 115: Sollstatormagnetfeldbestimmungsschritt
- 117: Generierungsschritt
- 119: zweiter Statormagnetfeldbestimmungsschritt
- 121: Zuordnungsschritt
- 123: Erregerstrombestimmungsschritt
- 125: Sensorkalibrierschritt
- 127: erster Referenzmagnetfeldgenerierungsschritt
- 129: erster Referenzmagnetfeldbestimmungsschritt
- 131: Abweichungsbestimmungsschritt
- 133: erster Korrekturschritt
- 135: Temperaturbestimmungsschritt
- 137: zweiter Referenzmagnetfeldgenerierungsschritt
- 139: zweiter Referenzmagnetfeldbestimmungsschritt
- 141: Abhängigkeitsbestimmungsschritt
- 143: zweiter Korrekturschritt

- 200: Planarantriebssystem
- 201: Steuereinheit
- 203: Datenverbindung

- 300: Statormodul
- 301: Träger
- 303: Statoroberfläche
- 305: Statormodulgehäuse
- 307: Statoreinheit
- 309: Statorleiter
- 311: Statorleiterzwischenraum
- 313: Schnittebene
- 315: Anschlussleitung
- 332: Statormodulunterseite

- 400: Läufer
- 401: Magnetanordnung
- 403: Freifläche
- 405: Befestigungsstruktur
- 407: erste Läuferrichtung
- 409: zweite Läuferrichtung
- 411: erste Magneteinheit
- 413: zweite Magneteinheit
- 415: dritte Magneteinheit
- 417: vierte Magneteinheit

- 500: Sensormodul
- 501: Magnetfeldsensor
- 502: Raumbereich
- 503: erstes periodisches Gitter
- 505: zweites periodisches Gitter
- 507: erste Richtung
- 509: zweite Richtung
- 511: erster Magnetfeldsensor
- 513: zweiter Magnetfeldsensor

## Patentansprüche

1. Verfahren (100) zum Steuern eines Planarantriebssystems (200), wobei das Planarantriebssystem (200) wenigstens eine Steuereinheit (201), ein Statormodul (300) und einen Läufer (400) umfasst, wobei das Statormodul (300) eine Mehrzahl von elektrisch bestrombaren Statorleitern (309) zum Erzeugen von Statormagnetfeldern zum elektrischen Steuern des Läufers (400) umfasst, wobei der Läufer (400) eine Magnetanordnung (401) zum Generieren eines Läufermagnetfelds aufweist, wobei über das Statormagnetfeld und das Läufermagnetfeld eine magnetische Kopplung zwischen dem Läufer (400) und dem Statormodul (300) erzielbar ist, wobei das Statormodul (300) zum Bestimmen einer Position des Läufers (400) ein Sensormodul (500) mit einer Mehrzahl von Magnetfeldsensoren (501) umfasst, wobei die Magnetfeldsensoren (501) in einer zweidimensionalen Anordnung am Statormodul (300) angeordnet sind, und wobei jeder Magnetfeldsensor (501) eingerichtet ist, für einen Raumbereich (502) in der zweidimensionalen Anordnung das Läufermagnetfeld zu bestimmen, umfassend:
Bestimmen einer Mehrzahl von Werten von Statormagnetfeldern für eine Mehrzahl verschiedener Erregerströme und für eine Mehrzahl von Raumbereichen (502) in der zweidimensionalen Anordnung der Magnetfeldsensoren (501) in einem ersten Statormagnetfeldbestimmungsschritt (101);
Generieren wenigstens eines Statormagnetfeldes durch Anlegen entsprechender Erregerströme an entsprechende Statorleiter (309) zum elektrischen Steuern des Läufers (400) in einem Statormagnetfeldgenerierungsschritt (103);
Bestimmen einer Mehrzahl von Messwerten eines Gesamtmagnetfelds durch eine Mehrzahl von Magnetfeldsensoren (501) für eine Mehrzahl von Raumbereichen (502) des Sensormoduls (500) zum Ermitteln einer Position des Läufers (400) in einem Gesamtmagnetfeldbestimmungsschritt (105), wobei das Gesamtmagnetfeld eine Überlagerung der Mehrzahl von Statormagnetfeldern und dem Läufermagnetfeld umfasst;
Kompensieren von Beiträgen der Statormagnetfelder zu den von den Magnetfeldsensoren (501) bestimmten Messwerten des Gesamtmagnetfelds und Generieren von durch die jeweiligen Magnetfeldsensoren (501) für den jeweiligen Raumbereich (502) bestimmten Messwerten des Läufermagnetfelds in einem Kompensationsschritt (107), wobei das Kompensieren eine Subtraktion der für die Erregerströme bestimmten Werte der Statormagnetfelder von den von den Magnetfeldsensoren (501) bestimmten Messwerten des Gesamtmagnetfelds umfasst; und
Ermitteln einer Position des Läufers (400) auf Basis der generierten Messwerte des Läufermagnetfelds in einem Positionsbestimmungsschritt (109).

2. Verfahren (100) nach Anspruch 1, wobei das Bestimmen der Werte der Statormagnetfelder im ersten Statormagnetfeldbestimmungsschritt (101) durch eine Mehrzahl von Messungen einer Mehrzahl von Magnetfeldsensoren (501) des Sensormoduls (500) durchgeführt wird.

3. Verfahren (100) nach einem der voranstehenden Ansprüche, wobei im Gesamtmagnetfeldbestimmungsschritt (105) für jeden Magnetfeldsensor (501) wenigstens ein Messwert des Gesamtmagnetfelds bestimmt wird; und
wobei im Kompensationsschritt (107) Beiträge der Statormagnetfelder zu den Messwerten des Gesamtmagnetfelds für jeden Magnetfeldsensor (501) kompensiert werden, und wobei für jeden Magnetfeldsensor (501) wenigstens ein Messwert des Läufermagnetfelds für den Raumbereich (502) des jeweiligen Magnetfeldsensors (501) generiert wird.

4. Verfahren (100) nach einem der voranstehenden Ansprüche, wobei der erste Statormagnetfeldbestimmungsschritt (101) umfasst:
Bestimmen von Modelbeschreibungen von Abhängigkeiten zwischen Erregerströmen und Statormagnetfeldern der Statorleiter (309) in einem Modellbestimmungsschritt (111);
wobei der Kompensationsschritt (107) umfasst:
Kompensieren der Beiträge der Statormagnetfelder zu den von den Magnetfeldsensoren (501) bestimmten Messwerten des Gesamtmagnetfelds für beliebige Erregerströme auf Basis der bestimmten Modellbeschreibungen der Abhängigkeiten zwischen den Erregerströmen und den Statormagnetfeldern der Statorleiter (309).

5. Verfahren (100) nach Anspruch 4, wobei im Modellbestimmungsschritt (111) für jeden Statorleiter (309) eine individuelle Modellbeschreibung der Abhängigkeit zwischen den an dem jeweiligen Statorleiter (309) angelegten Erregerströmen und den vom jeweiligen Statorleiter (309) erzeugten Statormagnetfeldern bestimmt wird, und wobei im Kompensationsschritt (107) für jeden Magnetfeldsensor (501) auf Basis der erstellten Modelle die Beiträge der Statormagnetfelder zu den von dem jeweiligen Magnetfeldsensor (501) bestimmten Messwerten des Gesamtmagnetfelds kompensiert werden und Messwerte des Läufermagnetfelds bestimmt werden.

6. Verfahren (100) nach Anspruch 4 oder 5, wobei die Modellbeschreibung der Abhängigkeit zwischen den an dem jeweiligen Statorleiter (309) angelegten Erregerströmen und den vom jeweiligen Statorleiter (309) erzeugten Statormagnetfeldern im Modellbestimmungsschritt (111) ein entsprechend trainiertes Neuronales Netz umfasst, wobei das entsprechend trainierte Neuronale Netz eingerichtet ist, für einen beliebigen Statorleiter (309) und beliebige Erregerströme für beliebige Raumbereiche (502) beliebiger Magnetfeldsensoren (501) Werte des entsprechenden Statormagnetfelds zu bestimmen.

7. Verfahren (100) nach Anspruch 4, 5 oder 6, wobei die Kompensation im Kompensationsschritt (107) durch ein entsprechend trainiertes Neuronales Netz durchgeführt wird, wobei das entsprechend trainierte Neuronale Netz eingerichtet ist, für jeden Magnetfeldsensor (501) die Beiträge der Statormagnetfelder zu den von dem jeweiligen Magnetfeldsensor (501) bestimmten Messwerten des Gesamtmagnetfelds zu kompensiert und Messwerte des Läufermagnetfelds zu bestimmen.

8. Verfahren (100) nach einem der voranstehenden Ansprüche, ferner umfassend:
Kalibrieren der Statorleiter (309) in einem Kalibierschritt (113).

9. Verfahren (100) nach Anspruch 8, wobei der Kalibrierschritt (113) umfasst:
Bestimmen einer Mehrzahl von Sollstatormagnetfeldern für eine Mehrzahl von Sollerregerströmen für eine Mehrzahl von Statorleitern (309) in einem Sollstatormagnetfeldbestimmungsschritt (115), wobei ein Sollstatormagnetfeld eines Statorleiters (309) einem Magnetfeld eines idealen Referenzleiters mit gleichen Parametern wie der jeweilige Statorleiter (309) für einen jeweiligen Sollerregerstrom entspricht;
Generieren auf Basis der Sollerregerströme von realen Statormagnetfeldern der Statorleiter (309) in einem Generierungsschritt (117), wobei ein reales Statormagnetfeld eines Statorleiters (309) ein durch den jeweiligen Statorleiter (309) für den jeweiligen Sollerregerstrom generiertes Magnetfeld ist;
Bestimmen von Werten der realen Statormagnetfelder für die Sollerregerströme der Mehrzahl von Statorleitern (309) in einem zweiten Statormagnetfeldbestimmungsschritt (119) ;
Definieren von Zuordnungen zwischen den Sollerregerströmen und den entsprechenden realen Statormagnetfeldern für eine Mehrzahl von Statorleitern (309) in einem Zuordnungsschritt (121); und
Bestimmen auf Basis der Zuordnungen von realen Erregerströmen für die Mehrzahl von Statorleitern (309) in einem Erregerstrombestimmungsschritt (123), wobei ein realer Erregerstrom eines Statorleiters (309) einem Sollerregerstrom entspricht, für den der jeweilige Statorleiter (309) ein entsprechendes reales Statormagnetfeld erzeugt.

10. Verfahren (100) nach Anspruch 9, wobei das Bestimmen der Werte der realen Statormagnetfelder im zweiten Statormagnetfeldbestimmungsschritt (119) durch eine Mehrzahl von Messungen einer Mehrzahl von Magnetfeldsensoren (501) des Sensormoduls (500) durchgeführt wird.

11. Verfahren (100) nach einem der voranstehenden Ansprüche, ferner umfassend:
Kalibrieren der Magnetfeldsensoren (501) in einem Sensorkalibrierschritt (125).

12. Verfahren (100) nach Anspruch 11, wobei der Sensorkalibrierschritt (125) umfasst:
Generieren eines ersten Referenzmagnetfelds in einem ersten Referenzmagnetfeldgenerierungsschritt (127), wobei Werte des ersten Referenzmagnetfelds für eine Mehrzahl von Raumbereichen (502) des Statormoduls (300) bekannt sind;
Ermitteln von Messwerten des Referenzmagnetfelds für eine Mehrzahl von Raumbereichen (502) des Statormoduls (300) durch eine Mehrzahl von Magnetfeldsensoren (501) in einem ersten Referenzmagnetfeldbestimmungsschritt (129);
Ermitteln für eine Mehrzahl von Magnetfeldsensoren (501) von Abweichungen der durch die Magnetfeldsensoren (501) ermittelten Messwerte des Referenzmagnetfelds von den bekannten Werten des Referenzmagnetfelds in den jeweiligen Raumbereichen (502) in einem Abweichungsbestimmungsschritt (131);
Korrigieren auf Basis der ermittelten Abweichungen der durch die Magnetfeldsensoren (501) ermittelten Messwerte des Gesamtmagnetfelds und/oder des Läufermagnetfelds und/oder der Statormagnetfelder in einem ersten Korrekturschritt (133).

13. Verfahren (100) nach einem der voranstehenden Ansprüche 11 oder 12, wobei der Sensorkalibrierschritt (125) ferner umfasst:
Ermitteln einer Mehrzahl verschiedener Temperaturen des Statormoduls (300) in einem Temperaturbestimmungsschritt (135) ;
Generieren eines zweiten Referenzmagnetfelds in einem zweiten Referenzmagnetfeldgenerierungsschritt (137), wobei Werte des zweiten Referenzmagnetfelds für eine Mehrzahl von Raumbereichen (502) bekannt sind;
Ermitteln durch eine Mehrzahl von Magnetfeldsensoren (501) einer Mehrzahl von Messwerten des zweiten Referenzmagnetfelds für die Mehrzahl von Temperaturen und eine Mehrzahl von Raumbereichen (502) in einem zweiten Referenzmagnetfeldbestimmungsschritt (139);
Ermitteln von Temperaturabhängigkeiten der durch die Magnetfeldsensoren (501) bestimmten Messwerte des zweiten Referenzmagnetfelds auf Basis der Werte des zweiten Referenzmagnetfelds in einem Abhängigkeitsbestimmungsschritt (141); und
Korrigieren der durch die Magnetfeldsensoren (501) ermittelten Messwerte des Gesamtmagnetfelds und/oder des Läufermagnetfelds und/oder der Statormagnetfelder auf Basis der ermittelten Temperaturabhängigkeiten in einem zweiten Korrekturschritt (143).

14. Verfahren (100) nach einem der voranstehenden Ansprüche 11 bis 13, wobei das erste Referenzmagnetfeld und/oder das zweite Referenzmagnetfeld das Läufermagnetfeld des Läufers (400) oder das Statormagnetfeld des Statormoduls (300) ist.

15. Planarantriebssystem (200) umfassend wenigstens eine Steuereinheit (201), ein Statormodul (300) und einen Läufer (400), wobei die Steuereinheit über wenigstens eine Datenverbindung mit dem Statormodul (300) verbunden ist, wobei das Statormodul (300) eine Mehrzahl von elektrisch bestrombaren Statorleitern (309) zum Erzeugen von Statormagnetfeldern zum elektrischen Steuern des Läufers (400) umfasst, wobei der Läufer (400) eine Magnetanordnung (401) zum Generieren eines Läufermagnetfelds aufweist, wobei über das Statormagnetfeld und das Läufermagnetfeld eine magnetische Kopplung zwischen dem Läufer (400) und dem Statormodul (300) erzielbar ist, wobei das Statormodul (300) zum Bestimmen einer Position des Läufers (400) ein Sensormodul (500) mit einer Mehrzahl von Magnetfeldsensoren (501) umfasst, wobei die Magnetfeldsensoren (501) in einer zweidimensionalen Anordnung am Statormodul (300) angeordnet sind, wobei jeder Magnetfeldsensor (501) eingerichtet ist, für einen Raumbereich (502) in der zweidimensionalen Anordnung das Läufermagnetfeld zu bestimmen, und wobei die Steuereinheit eingerichtet ist, ein Verfahren (100) nach einem der voranstehenden Ansprüche 1 bis 14 auszuführen.
